(19) Europäisches Patentamt
European Patent Office
Office européen des brevets

(11) **EP 3 775 308 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **19716282.9**

(22) Anmeldetag: **14.03.2019**

(51) Internationale Patentklassifikation (IPC):
***C22C 19/05*** *(2006.01)*    ***C22F 1/10*** *(2006.01)*
***B33Y 70/00*** *(2020.01)*

(52) Gemeinsame Patentklassifikation (CPC):
**C22C 19/053; B22F 1/065; B33Y 70/00; C22C 19/055; C22F 1/10;** Y02P 10/25

(86) Internationale Anmeldenummer:
**PCT/DE2019/100229**

(87) Internationale Veröffentlichungsnummer:
**WO 2019/185082 (03.10.2019 Gazette 2019/40)**

(54) **VERWENDUNG EINER NICKEL-CHROM-EISEN-ALUMINIUM-LEGIERUNG**

USE OF A NICKEL-CHROMIUM-IRON-ALUMINIUM ALLOY

UTILISATION D'UN ALLAIGE DE NICKEL-CHROME-FER-ALUMINUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2018 DE 102018107248**

(43) Veröffentlichungstag der Anmeldung:
**17.02.2021 Patentblatt 2021/07**

(73) Patentinhaber: **VDM Metals International GmbH 58791 Werdohl (DE)**

(72) Erfinder:
• **HATTENDORF, Heike 58791 Werdohl (DE)**
• **SCHMIDT, Christina 44879 Bochum (DE)**

(56) Entgegenhaltungen:
**WO-A1-2017/026519    DE-A1-102012 011 161**

**Beschreibung**

Die Erfindung betrifft die Verwendung einer Nickel-Chrom-Eisen-Aluminium-Knetlegierung mit hervorragender Hochtemperaturkorrosionsbeständigkeit, guter Kriechbeständigkeit und verbesserter Verarbeitbarkeit.

Austenitische Nickel-Chrom-Eisen-Aluminium-Legierungen mit unterschiedlichen Nickel-, Chrom- und Aluminiumgehalten werden seit langem im Ofenbau und in der chemischen und petrochemischen Industrie eingesetzt. Für diesen Einsatz ist eine gute Hochtemperaturkorrosionsbeständigkeit auch in aufkohlenden Atmosphären und eine gute Warmfestigkeit/ Kriechbeständigkeit erforderlich.

Generell ist zu bemerken, dass die Hochtemperaturkorrosionsbeständigkeit der in Tabelle 1 angegebenen Legierungen mit zunehmendem Chromgehalt steigt. Alle diese Legierungen bilden eine Chromoxidschicht ($Cr_2O_3$) mit einer darunter liegenden, mehr oder weniger geschlossenen, $Al_2O_3$-Schicht. Geringe Zugaben von stark Sauerstoff affinen Elementen wie z.B. Y oder Ce verbessern die Oxidationsbeständigkeit. Der Chromgehalt wird im Verlauf des Einsatzes im Anwendungsbereich zum Aufbau der schützenden Schicht langsam verbraucht. Deshalb wird durch einen höheren Chromgehalt die Lebensdauer des Werkstoffs erhöht, da ein höherer Gehalt des die Schutzschicht bildenden Elementes Chrom den Zeitpunkt hinauszögert, an dem der Cr-Gehalt unter der kritischen Grenze ist und sich andere Oxide als CrzOs bilden, was z.B. eisenhaltige und nickelhaltige Oxide sind. Eine weitere Steigerung der Hochtemperaturkorrosionsbeständigkeit lässt sich durch Zugaben von Aluminium und Silizium erreichen. Ab einem gewissen Mindestgehalt bilden diese Elemente eine geschlossene Schicht unterhalb der Chromoxidschicht und verringern so den Verbrauch an Chrom.

Bei aufkohlenden Atmosphären (CO, $H_2$, $CH_4$, $CO_2$, $H_2O$ Gemische) kann Kohlenstoff in das Material eindringen, so dass es zur Bildung innerer Karbide kommen kann. Diese bewirken einen Verlust an Kerbschlagzähigkeit. Auch kann der Schmelzpunkt auf sehr niedrige Werte (bis zu 350 °C) sinken und es kann zu Umwandlungsvorgängen durch Chromverarmung der Matrix kommen.

Eine hohe Beständigkeit gegen Aufkohlung wird durch Werkstoffe mit geringer Löslichkeit für Kohlenstoff und geringer Diffusionsgeschwindigkeit des Kohlenstoffs erreicht. Nickellegierungen sind deshalb generell beständiger gegen Aufkohlung als Eisenbasislegierungen, da sowohl die Kohlenstoffdiffusion als auch die Kohlenstofflöslichkeit in Nickel geringer sind als im Eisen. Eine Erhöhung des Chromgehaltes bewirkt eine höhere Aufkohlungsbeständigkeit durch Bildung einer schützenden Chromoxidschicht, es sei denn, dass der Sauerstoffpartialdruck im Gas zur Bildung dieser schützenden Chromoxidschicht nicht ausreicht. Bei sehr geringeren Sauerstoffpartialdrücken, können Werkstoffe eingesetzt werden, die eine Schicht aus Siliziumoxid bzw. des noch stabileren Aluminiumoxids bilden, die beide noch bei deutlich geringeren Sauerstoffgehalten schützende Oxidschichten bilden können.

In dem Fall, dass die Kohlenstoffaktivität größer 1 ist, kann es Nickel-, Eisen- oder Kobaltbasislegierungen zu "Metal Dusting" kommen. In Kontakt mit dem übersättigten Gas können die Legierungen große Mengen an Kohlenstoff aufnehmen. Die in der an Kohlenstoff übersättigten Legierung stattfindenden Entmischungsvorgänge führen zur Materialzerstörung. Dabei zerfällt die Legierung in ein Gemisch aus Metallpartikeln, Graphit, Karbiden und/oder Oxiden. Diese Art der Materialzerstörung tritt im Temperaturbereich von 500°C bis 750°C auf.

Typische Bedingungen für das Auftreten von Metal Dusting sind stark aufkohlende CO, $H_2$ oder $CH_4$-Gasgemische, wie sie in der Ammoniaksynthese, in Methanolanlagen, in metallurgischen Prozessen, aber auch in Härtereiöfen auftreten.

Tendenziell steigt die Beständigkeit gegen Metal Dusting mit zunehmendem Nickelgehalt der Legierung (Grabke, H.J., Krajak, R., Müller-Lorenz, E.M., Strauß, S.: Materials and Corrosion 47 (1996), p. 495), allerdings sind auch Nickellegierungen nicht resistent gegen Metal Dusting.

Einen deutlichen Einfluss auf die Korrosionsbeständigkeit unter Metal Dusting Bedingungen haben der Chrom- und Aluminiumgehalt (siehe Bild 1). Nickellegierungen mit niedrigem Chromgehalt (wie die Legierung Alloy 600, siehe Tabelle 1) zeigen vergleichsweise hohe Korrosionsraten unter Metal Dusting Bedingungen. Deutlich resistenter sind die Nickellegierung Alloy 602 CA (N06025) mit einem Chromgehalt von 25 % und einem Aluminiumgehalt von 2,3 % sowie Alloy 690 (N06690) mit einem Chromgehalt von 30 % (Hermse, C.G.M. and van Wortel, J.C.: Metal dusting: relationship between alloy composition and degradation rate. Corrosion Engineering, Science and Technology 44 (2009), p. 182 - 185). Die Widerstandsfähigkeit gegen Metal Dusting steigt mit der Summe Cr +AL.

Die Warmfestigkeit bzw. Kriechfestigkeit bei den angegebenen Temperaturen wird u. a. durch einen hohen Kohlenstoffgehalt verbessert. Aber auch hohe Gehalte an Mischkristallverfestigenden Elementen wie Chrom, Aluminium, Silizium, Molybdän und Wolfram verbessern die Warmfestigkeit. Im Bereich von 500°C bis 900°C können Zugaben von Aluminium, Titan und/oder Niob die Festigkeit verbessern durch Ausscheidung der □' und/oder □" Phase.

Beispiele nach dem Stand der Technik zu diesen Legierungen sind in Tabelle 1 aufgelistet.

Legierungen wie Alloy 602 CA (N06025), Alloy 693 (N06693) oder Alloy 603 (N06603) sind für ihre hervorragende Korrosionsbeständigkeit im Vergleich zu Alloy 600 (N06600) oder Alloy 601 (N06601) auf Grund des hohen Aluminiumgehaltes von mehr als 1,8 % bekannt. Alloy 602 CA (N06025), Alloy 693 (N06693), Alloy 603 (N06603), und Alloy 690 (N06690) zeigen auf Grund ihrer hohen Chrom- und/oder Aluminiumgehalte eine hervorragende Aufkohlungsbeständigkeit bzw. Metal Dusting Beständigkeit. Zugleich zeigen Legierungen wie Alloy 602 CA (N06025), Alloy 693 (N06693) oder Alloy 603 (N06603) auf Grund des hohen Kohlenstoffgehalts bzw. Aluminiumgehaltes eine hervorragende Warmfestigkeit bzw. Kriechfestigkeit in dem Temperaturbereich in dem Metal Dusting auftritt. Alloy 602 CA (N06025) und Alloy 603 (N06603) haben selbst bei Temperaturen oberhalb von 1000 °C noch eine hervorragende Warmfestigkeit bzw. Kriechfestigkeit. Allerdings wird z. B. durch die hohen Aluminiumgehalte die Verarbeitbarkeit beeinträchtigt, wobei die Beeinträchtigung umso stärker ist, je höher der Aluminiumgehalt ist (Alloy 693 - N06693). Gleiches gilt in erhöhtem Maß für Silizium, das niedrig schmelzende intermetallische Phasen mit Nickel bildet. In Alloy 602 CA (N06025) oder Alloy 603 (N06603) ist insbesondere die Kaltumformbarkeit durch einen hohen Anteil an Primärkarbiden begrenzt.

Die US 6623869B1 offenbarte ein metallisches Material, dass aus nicht mehr als 0,2 % C, 0,01 - 4 % Si, 0,05 - 2,0 % Mn, nicht mehr als 0,04 % P, nicht mehr als 0,015 % S, 10 - 35 % Cr, 30 - 78 % Ni, 0,005 - 4,5 % Al, 0,005 - 0,2 % N, und ein Element oder beide von 0,015 - 3 % Cu und 0,015 - 3 % Co, mit dem Rest zu 100% Eisen besteht. Dabei ist der Wert von 40Si+Ni+5Al+40N+10(Cu+Co) nicht unter 50, wobei die Symbole der Elemente den Gehalt der entsprechenden Elemente bedeuten. Das Material hat eine ausgezeichnete Korrosionsbeständigkeit in einer Umgebung, in der Metal Dusting stattfinden kann und kann deshalb für Ofenrohre, Rohrsystem, Wärmetauscherrohre u.ä. in Petroleumraffinerien oder petrochemischen Anlagen verwendet werden und kann die Lebensdauer und die Sicherheit der Anlage merklich verbessern.

Die EP 0 508 058 A1 offenbart eine austenitische Nickel-Chrom-Eisen-Legierung, bestehend aus (in Gewichts-%) C 0,12 - 0,3 %, Cr23 - 30 %, Fe 8 - 11 %, Al 1,8 - 2,4 %, Y 0,01 - 0,15 %, Ti 0,01 - 1,0 %, Nb 0,01 - 1,0 %, Zr 0,01 - 0,2 %, Mg 0,001 - 0,015 %, Ca 0,001 - 0,01 %, N max. 0,03 %, Si max. 0,5 %, Mn max. 0,25 %, P max. 0,02 %, S max. 0,01 %, Ni Rest einschließlich unvermeidbarer erschmelzungsbedingter Verunreinigungen.

Die US 4882125 B1 offenbart eine hochchromhaltige Nickel-Legierung, die durch eine ausgezeichnete Beständigkeit gegen Aufschwefelung und Oxidation bei Temperaturen größer 1093°C, eine ausgezeichnete Kriechbeständigkeit von mehr als 200 h bei Temperaturen oberhalb von 983°C und einer Spannung von 2000 PSI, eine gute Zugfestigkeit und eine gute Dehnung, beides bei Raumtemperatur und erhöhten Temperaturen gekennzeichnet ist, bestehend aus (in Gewichts-%) 27 - 35 % Cr, 2,5 - 5 % Al, 2,5 - 6 % Fe, Nb 0,5 - 2,5 % Nb, bis zu 0,1 C, jeweils bis zu 1% Ti und Zr, Bis zu 0,05% Ce, bis zu 0,05 % Y, bis zu 1% Si, bis zu 1% Mn und Ni Rest.

Die EP 0 549 286 A1 offenbart eine hochtemperaturbeständige Ni-Cr-Legierung, beinhaltend 55 - 65 % Ni, 19 - 25 %, Cr 1 - 4,5 % AI, 0,045 - 0,3 % Y, 0,15 - 1 % Ti, 0,005 - 0,5 % C, 0,1 - 1,5 % Si, 0 - 1 % Mn und mindestens 0,005 % in Summe mindestens eines der Elemente der Gruppe die Mg, Ca, Ce enthält, < 0,5 % in Summe Mg + Ca, < 1 % Ce, 0,0001 - 0,1 % B, 0 - 0,5 % Zr, 0,0001 - 0,2 % N, 0 - 10 % Co, Rest Eisen und Verunreinigungen.

Durch die DE 600 04 737 T2 ist eine hitzebeständige Nickelbasislegierung bekannt geworden, beinhaltend $\leq$ 0,1 % C, 0,01 - 2 % Si, $\leq$ 2 % Mn, $\leq$ 0,005 % S, 10 - 25 % Cr, 2,1 - < 4,5 % AI, $\leq$ 0,055 % N, insgesamt 0,001 - 1 % mindestens eines der Elemente B, Zr, Hf, wobei die genannten Elemente in folgenden Gehalten vorhanden sein können: B $\leq$ 0,03 %, Zr $\leq$ 0,2 %, Hf < 0,8 %. Mo 0,01 - 15 %, W 0,01 - 9 %, wobei ein Gesamtgehalt Mo + W von 2,5 - 15 % gegeben sein kann, Ti 0 - 3 %, Mg 0 - 0,01 %, Ca 0 - 0,01 %, Fe 0 - 10 %, Nb 0 - 1 %, V 0 - 1 %, Y 0 - 0,1 %, La 0 - 0,1 %, Ce 0 - 0,01 %, Nd 0 - 0,1 %, Cu 0 - 5 %, Co 0 - 5 %, Rest Nickel. Für Mo und W muss die folgende Formel erfüllt sein:

$$2,5 \leq Mo + W \leq 15 \qquad\qquad (1)$$

In der DE 2417186 wird die Verwendung einer metallkarbidhaltigen eisenfreien austenitischen Sinterlegierung, bestehend aus (in Gew.-%) 15 bis 40 % Metallkarbid, 60 bis 85 % einer Nickellegierung, mit 0,5 bis 3,5 % Molybdän, 0,5 bis 2,5 % Aluminium, 13,5 bis 33,0 % Chrom, Rest Nickel, als Werkstoff für, nach der spanabhebenden Bearbeitung durch eine Auslagerungsbehandlung auf höhere Härte und Verschleißfestigkeit, aushärtbare Gegenstände, die gegenüber wässrigen Medien mit hoher Chlorid Konzentration korrosionsbeständig sein müssen, beschrieben.

In der EP 1505166 A1 wird ein Schneidelement, bestehend aus einer Ni-Cr Legierung enthaltend 32 bis 44 Massen % Cr, 2,3 bis 6 Massen % Al, Rest Ni, Verunreinigungen, und zusätzliche Spurenelemente beschrieben, das dabei eine Rockwell C Härte von $\geq$ 52 hat.

In der DE 10 2012 011 161 A1 wird eine Nickel-Chrom-Aluminium-Legierung beschrieben, mit (in Gew.-%) 24 - 33 % Chrom, 1,8 - 4,0 % Aluminium, 0, 10 - 7,0 % Eisen, 0,001 - 0,50 % Silizium, 0,005 - 2,0 % Mangan, 0,00 - 0,60 % Titan, jeweils 0,0002 - 0,05 % Magnesium und/oder Kalzium, 0,005 - 0,12 % Kohlenstoff, 0,001 - 0,050 % Stickstoff, 0,0001 - 0,020 % Sauerstoff, 0,001 - 0,030 % Phosphor, max. 0,010 % Schwefel, max. 2,0 % Molybdän, max. 2,0 % Wolfram, Rest Nickel und den üblichen verfahrensbedingten Verunreinigungen. Diese Legierung findet ihre Verwendung als Band, Blech, Draht, Stange, längsnahtgeschweißtes Rohr bzw. nahtloses Rohr in stark aufkohlenden Atmosphären, als Bauteil in der petrochemischen Industrie sowie im Ofenbau.

Durch die WO 2017/026519 A1 ist ein Ni-basiertes Superlegierungspulver für den Einsatz in der additiven Fertigung bekannt geworden, mit (in Masse-%) 0 - 0,2 % C, 0,05 - 1,0 % Si, 0,05 - 1,0 % Mn, 10,0 - 25,00 % Cr, 0,01 - 10 % Fe, 0,01 - 8,0 % AI, 0,1 - 8,0 % Ti, $\leq$ 0,002 % S und/oder $\leq$ 0,10 % N, Rest Ni und unvermeidbare Verunreinigungen.

Die der Erfindung zugrunde liegende Aufgabe besteht darin, ein Pulver aus einer vorgebbaren Legierung bereitzustellen, das eine optimierte Zusammensetzung aufweist und gut verarbeitbar ist.

Diese Aufgabe wird gelöst durch die Verwendung einer Nickel-Chrom-Aluminium-Legierung als Pulver für die Additive Fertigung, wobei das Pulver aus sphärischen Partikel einer Größe von 5 bis 250 $\mu$m besteht, und wobei diese Legierung aus (in Gew.-%) 24 bis 33 % Chrom, 1,8 bis 4,0 % Aluminium, 0,10 bis 7,0 % Eisen, 0,001 bis < 0,05 % Silizium, 0,005 bis < 0,05 % Mangan, 0,00 bis 0,60% Titan, jeweils 0,0 bis 0,05 % Magnesium und/oder Kalzium, 0,005 bis 0,12 % Kohlenstoff, 0,001 bis 0,050 % Stickstoff, 0,00001 - 0,100 % Sauerstoff, 0,001 bis 0,030 % Phosphor, max. 0,010 % Schwefel, max. 2,0 % Molybdän, max. 2,0 % Wolfram, wahlweise mit Gehalten an Yttrium von 0,0 - 0,2 %, Cer von 0,0 - 0,02 , Niob vom 0,0 - 1,1 %, Zirkon von 0,0 - 0,20 %, Bor von 0,0001 - 0,008 %, des Weiteren wahlweise enthaltend Kobalt 0,0 - 5,0 %, Kupfer max. 0,5 %, Rest Nickel und den üblichen verfahrensbedingten Verunreinigungen in Gehalten von max. 0,002 % Pb, max. 0,002 % Zn, max. 0,002 % Sn besteht, wobei das Pulver bei einer Porengröße > 1 $\mu$m Gesamteinschüsse von 0,0 - 4 % Porenfläche ha, wobei die Partikel eine Größe von 5 - 150 $\mu$m, insbesondere 10 - 150 $\mu$m, aufweisen, wobei das Pulver eine Schüttdichte von 2 bis zur Dichte der Legierung von max. 8 g / cm$^3$ hat und wobei folgende Beziehung erfüllt sein muss:

$$Fp \leq 39,9$$

mit

$$Fp = Cr + 0,272{*}Fe + 2,36{*}Al + 2,22{*}Si + 2,48{*}Ti \qquad (3a)$$

$$+ 0,374{*}\ Mo + 0,538{*}W - 11,8{*}C \qquad (4a)$$

wobei Cr, Fe, Al, Si, Ti, Mo, W und C die Konzentration der betreffenden Elemente in Masse% sind.

Vorteilhafte Weiterbildungen des Erfindungsgegenstandes sind den zugehörigen Unteransprüchen zu entnehmen.

Der Spreizungsbereich für die Partikelgröße liegt zwischen 5 bis 250 $\mu$m, wobei bevorzugte Bereiche zwischen 5 und 150 $\mu$m, bzw. 10 und 150 $\mu$m liegen.

Der Aluminiumgehalt liegt zwischen 1,8 und 4,0 %, wobei auch hier, je nach Einsatzbereich der Legierung, bevorzugte Aluminiumgehalte wie folgt gegeben eingestellt werden können:

- 1,8 bis 3,2%
- 2,0 bis 3,2%
- 2,0 bis <3,0 %

  2,0 bis 2,8 %
  2,2 bis 2,8 %

- 2,2 bis 2,6 %

Der Eisengehalt liegt zwischen 0,1 und 7,0 %, wobei, abhängig vom Anwendungsbereich, bevorzugte Gehalte innerhalb der folgenden Spreizungsbereiche eingestellt werden können:

- 0,1-4,0%
- 0,1 - 3,0 %
- 0,1 - < 2,5 %
- 0,1 - 2,0 %
- 0,1 - 1,0 %

Der Siliziumgehalt liegt zwischen 0,001 und 0,50 %. Bevorzugt kann Si innerhalb des Spreizungsbereiches wie folgt in der Legierung eingestellt werden:

- 0,001 - 0,20 %
- 0,001 - <0,10 %
- 0,001 - <0,05 %

Gleiches gilt für das Element Mangan, das mit 0,005 bis 2,0 % in der Legierung enthalten sein kann. Alternativ ist auch folgender Spreizungsbereich denkbar:

- 0,005 - 0,50 %
- 0,005 - 0,20 %
- 0,005 - 0,10 %
- 0,005 - <0,05 %

Der Titangehalt liegt zwischen 0,0 und 0,60 %. Bevorzugt kann Ti innerhalb des Spreizungsbereiches wie folgt in der Legierung eingestellt werden:

- 0,001 - 0,60 %
- 0,001 - 0,50 %
- 0,001 - 0,30 %
- 0,01 - 0,30 %
- 0,01 - 0,25 %

Auch Magnesium und/oder Kalzium ist in Gehalten 0,00 bis 0,05 % enthalten. Bevorzugt besteht die Möglichkeit, diese Elemente wie folgt in der Legierung einzustellen:

- > 0,00 - 0,03 %
- > 0,00 - 0,02 %
- > 0,00 - 0,02 %

Die Legierung enthält 0,005 bis 0,12 % Kohlenstoff. Bevorzugt kann dieser innerhalb des Spreizungsbereiches wie folgt in der Legierung eingestellt werden:

- 0,01 - 0,10 %
- 0,02 - 0,10 %
- 0,03-0,10%

Dies gilt in gleicher Weise für das Element Stickstoff, das in Gehalten zwischen 0,0005 und 0,05 % enthalten ist. Bevorzugte Gehalte können wie folgt gegeben sein:

- 0,001 - 0,04 %

Die Legierung enthält des Weiteren Phosphor in Gehalten zwischen 0,001 und 0,030 %. Bevorzugte Gehalte können wie folgt gegeben sein:

- 0,001 - 0,020 %

Die Legierung enthält des Weiteren Sauerstoff in Gehalten zwischen 0,00001 und 0,100 %. Bevorzugte Gehalte können wie folgt gegeben sein:

- 0,00001 - 0,1
- 0,00002 - 0,1
- 0,00005 - 0,1
- 0,00008 - 0,1
- 0,0001 - 0,1
- 0,0002 - 0,1
- 0,0005 - 0,1
- 0,0008 - 0,1
- 0,001 - 0,1
- 0,002 - 0,1
- 0,005 - 0,1
- 0,008 - 0,1
- 0,010 - 0,1
- 0,00001 - 0,10

- 0,00001 - 0,08
- 0,00001 - 0,05
- 0,00001 - 0,03
- 0,00001 - 0,02

Das Element Schwefel ist wie folgt in der Legierung gegeben:

- Schwefel     max. 0,010 %

Molybdän und Wolfram sind einzeln oder in Kombination in der Legierung mit einem Gehalt von jeweils maximal 2,0 % enthalten. Bevorzugte Gehalte können wie folgt gegeben sein:

|  |  |
|---|---|
| - Mo | max. 1,0 % |
| - W | max. 1,0 % |
| - Mo | max. <1,0 % |
| - W | max. <1,0 % |
| - Mo | max. < 0,50 % |
| - W | max. <0,50 % |
| - Mo | max. < 0,05 % |
| - W | max. < 0,05 % |

Für hoch korrosive Bedingungen, aber insbesondere für eine gute Metal Dusting Beständigkeit, ist es vorteilhaft, wenn die folgende Beziehung zwischen Cr und Al erfüllt ist:

$$Cr + Al \geq 28 \qquad (2a)$$

wobei Cr und Al die Konzentration der betreffenden Elemente in Masse-% sind.

Bevorzugte Bereiche können eingestellt werden mit

$$Cr + Al \geq 29 \qquad (2b)$$

$$Cr + Al \geq 30 \qquad (2c)$$

$$Cr + Al \geq 31 \qquad (2d)$$

Darüber hinaus muss die folgende Beziehung erfüllt sein, damit eine ausreichende Phasenstabilität gegeben ist:

$$Fp \leq 39,9 \text{ mit} \qquad (3a)$$

$$Fp = Cr + 0,272*Fe + 2,36*Al + 2,22*Si + 2,48*Ti$$

$$+ 0,374*Mo + 0,538*W - 11,8*C \qquad (4a)$$

wobei Cr, Fe, Al, Si, Ti, Mo, W und C die Konzentration der betreffenden Elemente in Masse-% sind.

Bevorzugte Bereiche können eingestellt werden mit:

$$Fp \leq 38,4 \qquad (3b)$$

$$Fp \leq 36,6 \qquad (3c)$$

Wahlweise kann in der Legierung das Element Yttrium in Gehalten von 0,0 bis 0,20 % eingestellt werden. Bevorzugt kann Y innerhalb des Spreizungsbereiches wie folgt in der Legierung eingestellt werden:

- 0,0-0,15%
- 0,0-0,10%
- 0,0 - <0,10 %
- > 0,0 - 0,08%
- 0,001 - <0,045 %

Wahlweise kann in der Legierung das Element Lanthan in Gehalten von 0,0 bis 0,20 % eingestellt werden. Bevorzugt kann La innerhalb des Spreizungsbereiches wie folgt in der Legierung eingestellt werden:

- 0,0-0,15%
- 0,0-0,10%
- 0,0-<0,10 %
- > 0,0 - 0,08 %
- 0,001 - 0,04 %

Wahlweise kann in der Legierung das Element Ce in Gehalten von 0,0 bis 0,20 % eingestellt werden. Bevorzugt kann Ce innerhalb des Spreizungsbereiches wie folgt in der Legierung eingestellt werden:

- 0,0-0,15%
- 0,0-0,10%
- 0,0-<0,10 %
- > 0,0 - 0,08 %
- 0,001 - 0,04 %

Wahlweise kann bei gleichzeitiger Zugabe von Ce und La auch Cer-Mischmetall verwendet werden in Gehalten von 0,0 bis 0,20 %. Bevorzugt kann Cer-Mischmetall innerhalb des Spreizungsbereiches wie folgt in der Legierung eingestellt werden:

- 0,0-0,15%
- 0,0-0,10%
- 0,0-<0,10 %
- > 0,0 - 0,08 %
- - 0,001 - 0,04 %

Wahlweise kann in der Legierung das Element Nb in Gehalten von 0,0 bis 1,10 % eingestellt werden. Bevorzugt kann Nb innerhalb des Spreizungsbereiches wie folgt in der Legierung eingestellt werden:

- 0,001 - < 1,10 %
- 0,001 - < 1,0 %
- 0,001 - < 0,70 %
- 0,001 - < 0,50 %
- 0,001 - 0,30 %
- 0,01 - 0,3 %

Ist Nb in der Legierung enthalten, so muss die Formel 4a wie folgt um einen Term mit Nb ergänzt werden:

$$Fp = Cr + 0,272*Fe + 2,36*Al + 2,22*Si$$
$$+ 2,48*Ti + 1,26*Nb + 0,374*Mo + 0,538*W - 11,8*C \qquad (4b)$$

wobei Cr, Fe, Al, Si, Ti, Nb, Mo, W und C die Konzentration des betreffenden Elementes in Masse % sind.

Wahlweise kann der Zirkongehalt zwischen 0,00 und 0,20 % liegen. Bevorzugt kann Zr innerhalb des Spreizungsbereiches wie folgt in der Legierung eingestellt werden:

7

- 0,0-0,15%
- > 0,0 - <0,10 %
- 0,001 - 0,07 %
- 0,001 - 0,04 %

Wahlweise kann in der Legierung das Element Hafnium in Gehalten von 0,0 bis 0,20 % eingestellt werden. Bevorzugt kann Hf innerhalb des Spreizungsbereiches wie folgt in der Legierung eingestellt werden:

- -0,0 - 0,15 %
- > 0,0 - <0,10 %
- 0,001 - 0,07 %
- 0,001 - 0,04 %

Wahlweise kann in der Legierung auch 0,001 bis 0,60 % Tantal enthalten sein.

Bevorzugte Ta Gehalte können wie folgt gegeben sein:

- 0,01 bis 0,50 %
- 0,01 bis 0,40 %
- 0,01 bis 0,30 %
- 0,01 bis 0,20 %
- 0,01 bis 0,10 %
- 0,01 - < 0,10%

Wahlweise kann das Element Bor wie folgt in der Legierung enthalten sein:

| - Bor | 0,0001 - 0,008 % |

Bevorzugte Gehalte können wie folgt gegeben sein:

| - Bor | 0,0005 - 0,008 % |
| - Bor | 0,0005 - 0,004 % |

Des Weiteren kann die Legierung zwischen 0,0 bis 5,0 % Kobalt enthalten, der darüber hinaus noch wie folgt eingeschränkt werden kann:

- 0,01 bis 5,0 %
- 0,01 bis 2,0 %
- 0,1 bis 2,0 %
- 0,01 bis 0,5 %
- 0,01 - < 0,1%

Des Weiteren kann in der Legierung maximal 0,5% Cu enthalten sein.

Der Gehalt an Kupfer kann darüber hinaus wie folgt eingeschränkt werden:

| - Cu | max. <0,20 % oder 0,20 |
| - Cu | max. <0,10 % oder 0,10 |
| - Cu | max. <0,05 % oder 0,05 |
| - Cu | max. <0,015 % |

Ist Cu in der Legierung enthalten, so muss die Formel 4a wie folgt um einen Term mit Cu ergänzt werden:

$$Fp = Cr + 0{,}272{*}Fe + 2{,}36{*}Al + 2{,}22{*}Si$$
$$+ 2{,}48{*}Ti + 0{,}477{*}Cu + 0{,}374{*}Mo + 0{,}538{*}W - 11{,}8{*}C \qquad (4c)$$

wobei Cr, Fe, Al, Si, Ti, Cu, Mo, W und C die Konzentration des betreffenden Elementes in Masse % sind.

Sind Nb und Cu in der Legierung enthalten, so muss die Formel 4a wie folgt um einen Term mit Nb und einen Term mit Cu ergänzt werden:

$$Fp = Cr + 0,272*Fe + 2,36*Al + 2,22*Si$$
$$+ 2,48*Ti + 1,26*Nb + 0,477*Cu + 0,374*Mo + 0,538*W - 11,8*C \qquad (4d)$$

wobei Cr, Fe, Al, Si, Ti, Nb, Cu, Mo, W und C die Konzentration des betreffenden Elementes in Masse % sind.

Des Weiteren kann in der Legierung maximal 0,5 % Vanadium enthalten sein.

Der Gehalt an Vanadium kann darüber hinaus wie folgt eingeschränkt werden:

- V        max. <0,10 %

Schließlich können an Verunreinigungen noch die Elemente Blei, Zink und Zinn in Gehalten wie folgt gegeben sein:

- Pb       max. 0,002 %
- Zn       max. 0,002 %
- Sn       max. 0,002 %

Des Weiteren kann wahlweise die folgende Beziehung erfüllt sein, die eine besonders gute Verarbeitbarkeit beschreibt:

$$Fa \leq 60 \text{ mit} \qquad (5a)$$

$$Fa = Cr + 20,4*Ti + 201*C \qquad (6a)$$

wobei Cr, Ti und C die Konzentration der betreffenden Elemente in Masse-% sind.

Bevorzugte Bereiche können eingestellt werden mit:

$$Fa \leq 54 \qquad (5b)$$

Ist Nb in der Legierung enthalten, so muss die Formel 6a wie folgt um einen Term mit Nb ergänzt werden:

$$Fa = Cr + 6,15*Nb + 20,4*Ti + 201*C \qquad (6b)$$

wobei Cr, Nb, Ti und C die Konzentration der betreffenden Elemente in Masse-% sind.

Des Weiteren kann wahlweise die folgende Beziehung erfüllt sein, die eine besonders gute Warmfestigkeit bzw. Kriechfestigkeit beschreibt:

$$Fk \geq 45 \text{ mit} \qquad (7a)$$

$$Fk = Cr + 19*Ti + 10,2*Al + 12,5*Si + 98*C \qquad (8a)$$

wobei Cr, Ti, Al, Si und C die Konzentration der betreffenden Elemente in Masse-% sind.

Bevorzugte Bereiche können eingestellt werden mit:

$$Fk \geq 49 \qquad\qquad (7b)$$

$$Fk \geq 53 \qquad\qquad (7c)$$

Ist Nb und/ oder B in der Legierung enthalten, so muss die Formel 8a wie folgt um einen Term mit Nb und/oder B ergänzt werden:

$$Fk = Cr + 19*Ti + 34,3*Nb + 10,2*Al + 12,5*Si + 98*C + 2245*B \qquad (8b)$$

wobei Cr, Ti, Nb, Al, Si, C und B die Konzentration der betreffenden Elemente in Masse-% sind.

Das erfindungsgemäße Pulver wird bevorzugt in einer Vakuuminertgasverdüsungsanlage (VIGA) produziert. In dieser Anlage wird die Legierung in einem Vakuuminduktionsschmelzofen (VIM) erschmolzen, in einen Gießtrichter geleitet der zu einer Gasdüse führt, in der das erschmolzene Metall unter hohem Druck von 5 bis 100 bar mit Inertgas zu Metallpartikeln verdüst wird. Die Schmelze wird im Schmelztiegel bei 5 bis 400 °C über dem Schmelzpunkt erhitzt. Die Metallflussrate bei der Verdüsung beträgt 0,5 bis 80 kg Imin und die Gasflussrate 2 bis 150 m$^3$ / min. Durch die schnelle Abkühlung erstarren die Metallpartikel in Kugelform (sphärische Teilchen). Das bei der Verdüsung verwendete Inertgas kann bedarfsweise 0,01 bis 100 % Stickstoff enthalten. In einem Zyklon wird dann die Gasphase vom Pulver getrennt und anschließend das Pulver verpackt.

Das Inertgas bei der Pulverherstellung kann wahlweise Argon bzw. ein Gemisch aus Argon mit 0,01 bis < 100 % Stickstoff sein. Mögliche Einschränkungen des Stickstoffgehaltes können sein:

- 0,01 bis 80 %
- 0,01 bis 50 %
- 0,01 bis 30 %
- 0,01 bis 20 %
- 0,01 bis 10 %
- 0,01 bis 10 %
- 0,1 bis 5 %
- 0,5 bis 10 %
- 1 bis 5 %
- 2 bis 3 %

Alternativ kann wahlweise das Inertgas Helium sein.

Das Inertgas kann bevorzugt eine Reinheit von mindestens 99,996 Vol.% haben. Insbesondere soll der Stickstoffgehalt von 0,0 bis 10 ppmv der Sauerstoffgehalt von 0,0 bis 4 ppmv und einen H$_2$O Gehalt von $\leq$ 5 ppmv haben.

Insbesondere kann das Inertgas bevorzugt eine Reinheit von mindestens 99,999 Vol.% haben. Insbesondere soll der Stickstoffgehalt von 0,0 bis 5 ppmv der Sauerstoffgehalt von 0,0 bis 2 ppmv und einen H$_2$O Gehalt von $\leq$ 3 ppmv haben.

Der Taupunkt in der Anlage liegt im Bereich von -10 bis -120°C. Er liegt bevorzugt im Bereich von -30 bis -100°C.

Der Druck bei der Pulververdüsung kann bevorzugt 10 bis 80 bar betragen.

Die mittels additiver Fertigung hergestellten Bauteile und Komponenten bzw. Schichten auf Bauteilen und Komponenten werden aus Schichtdicken von 5 bis 500 $\mu$m aufgebaut und haben direkt nach der Herstellung ein texturiertes Gefüge mit in Baurichtung gestreckten Körnern einer mittleren Korngröße von 2 $\mu$m bis 1000 $\mu$m. Der bevorzugte Bereich liegt zwischen 5 $\mu$m und 500 $\mu$m.

Die mittels additiver Fertigung hergestellten Bauteile und Komponenten bzw. Schichten auf Bauteilen und Komponenten können wahlweise einer Lösungsglühung im Temperaturbereich von 700°C bis 1250°C für 0,1 min bis 70 h, ggf. unter Schutzgas, wie z. B. Argon oder Wasserstoff, gefolgt von einer Abkühlung an Luft, in der bewegten Glühatmosphäre oder im Wasserbad unterzogen werden. Danach kann wahlweise die Oberfläche durch Beizen, Strahlen, Schleifen, Drehen, Schälen, Fräsen gereinigt oder bearbeitet werden. Eine solche Bearbeitung kann wahlweise teilweise oder ganz auch schon vor der Glühung stattfinden.

Die mittels additiver Fertigung hergestellten Bauteile und Komponenten bzw. Schichten auf Bauteilen und Komponenten haben nach einer Glühung eine mittlere Korngröße von 2 $\mu$m bis 2000 $\mu$m. Der bevorzugte Bereich liegt zwischen 20 $\mu$m und 500 $\mu$m.

Die mittels additiver Fertigung aus dem erfindungsgemäß hergestellten Pulver hergestellten Bauteile und Komponenten bzw. Schichten auf Bauteilen und Komponenten sollen bevorzugt in Bereichen eingesetzt werden, in denen hoch korrosive Bedingungen, wie z.B. stark aufkohlende Bedingungen vorherrschen, wie z. B. bei Bauteilen in der petrochemischen Industrie. Darüber hinaus ist sie auch für den Ofenbau geeignet.

Unter additiver Fertigung werden auch Begriffe wie generative Fertigung, Rapid Technology, Rapid Tooling, Rapid Prototyping oder dergleichen verstanden.

Im Allgemeinen unterschieden werden hier:

3D-Druck mit Pulvern,
Selektives Lasersintern und
Selektives Laserschmelzen
Laserauftragsschweißen
Selektives Elektronenstrahlschweißen.

Durchgeführte Tests:

Die auftretenden Phasen im Gleichgewicht wurden für die verschiedenen Legierungsvarianten mit dem Programm JMatPro von Thermotech berechnet. Als Datenbasis für die Berechnungen wurde die Datenbank TTNI7 für Nickelbasislegierungen von Thermotech verwendet.

Die Umformbarkeit wird in einem Zugversuch nach DIN EN ISO 6892-1 bei Raumtemperatur bestimmt. Dabei wird die Dehngrenze $R_{p0,2}$, die Zugfestigkeit $R_m$ und die Dehnung A bis zum Bruch bestimmt. Die Dehnung A wird an der gebrochenen Probe aus der Verlängerung der ursprünglichen Messstrecke $L_0$ bestimmt:

$$A = (L_U-L_0)/L_0 \; 100 \% = \Delta L/ \; L_0 \; 100\%$$

Mit $L_u$ = Messlänge nach dem Bruch.

Je nach Messlänge wird die Bruchdehnung mit Indizes versehen:

Z. B. ist für $A_5$ die Messlänge $L_0 = 5 \cdot d_0$ mit $d_0$ = Anfangsdurchmesser einer Rundprobe

Die Versuche wurden an Rundproben mit einem Durchmesser von 6 mm im Messbereich und einer Messlänge $L_0$ von 30 mm durchgeführt. Die Probennahme erfolgte quer zur Umformrichtung des Halbzeuges. Die Umformgeschwindigkeit betrug bei $R_{p0,2}$ 10 MPa/s und bei $R_m$ 6,7 $10^{-3}$ 1/s (40%/min).

Die Größe der Dehnung A im Zugversuch bei Raumtemperatur kann als Maß für die Verformbarkeit genommen werden. Ein gut verarbeitbarer Werkstoff sollte eine Dehnung von mindestens 50 % haben.

Die Warmfestigkeit wird in einem Warmzugversuch nach DIN EN ISO 6892-2 bestimmt. Dabei wird die Dehngrenze $R_{p0,2}$, die Zugfestigkeit $R_m$ und die Dehnung A bis zum Bruch analog zum Zugversuch bei Raumtemperatur (DIN EN ISO 6892-1) bestimmt.

Die Versuche wurden an Rundproben mit einem Durchmesser von 6 mm im Messbereich und einer Anfangsmesslänge $L_0$ von 30 mm durchgeführt. Die Probennahme erfolgte quer zur Umformrichtung des Halbzeuges. Die Umformgeschwindigkeit betrug bei $R_{p0,2}$ 8,33 $10^{-5}$ 1/s (0,5 %/min) und bei $R_m$ 8,33 $10^{-4}$ 1/s (5 %/min).

Die Probe wird bei Raumtemperatur in eine Zugprüfmaschine eingebaut und ohne Belastung mit einer Zugkraft auf die gewünschte Temperatur aufgeheizt. Nach Erreichen der Prüftemperatur wird die Probe ohne Belastung eine Stunde (600 °C) bzw. zwei Stunden (700 °C bis 1100 °C) für einen Temperaturausgleich gehalten. Danach wird die Probe mit einer Zugkraft so belastet, dass die gewünschten Dehngeschwindigkeiten eingehalten werden, und die Prüfung beginnt.

Die Kriechfestigkeit eines Werkstoffes verbessert sich mit zunehmender Warmfestigkeit. Deshalb wird die Warmfestigkeit auch zur Beurteilung der Kriechfestigkeit der verschiedenen Werkstoffe benutzt.

Die Korrosionsbeständigkeit bei höheren Temperaturen wurde in einem Oxidationstest bei 1000°C an Luft bestimmt, wobei der Versuch alle 96 Stunden unterbrochen und die Massenänderungen der Proben durch die Oxidation bestimmt wurde. Die Proben wurden bei dem Versuch in Keramiktiegel gestellt, so dass ggf. abplatzendes Oxid aufgefangen wurde und durch Wiegen des die Oxide enthaltenden Tiegels die Masse des abgeplatzten Oxids bestimmt werden kann. Die Summe der Masse des abgeplatzten Oxids und der Massenänderung der Proben ist die Bruttomassenänderung der Probe. Die spezifische Massenänderung ist die auf die Oberfläche der Proben bezogene Massenänderung. Diese werden im Folgenden $m_{Netto}$ für die spezifische Netto-Massenänderung, $m_{Brutto}$ für die spezifische BruttoMassenänderung, $m_{spall}$ für die spezifische Massenänderung der abgeplatzten Oxide bezeichnet. Die Versuche wurden an Proben mit ca. 5 mm Dicke durchgeführt. Es wurden von jeder Charge 3 Proben ausgelagert, die angegebenen Werte sind die Mittelwerte dieser 3 Proben.

Beschreibung der Eigenschaften

Die erfindungsgemäße Legierung soll neben einer hervorragenden Korrosionsbeständigkeit in hoch korrosiven Bedingungen, hier zum Beispiel eine hervorragende, Metal Dusting Beständigkeit, zugleich die folgenden Eigenschaften haben:

- eine gute Phasenstabilität
- eine gute Verarbeitbarkeit
- eine gute Korrosionsbeständigkeit an Luft ähnlich der von Alloy 602CA (N06025)
- eine gute Warmfestigkeit / Kriechfestigkeit

Phasenstabilität

Im System Nickel-Chrom-Aluminium-Eisen mit Zusätzen an Ti und/oder Nb können sich je nach Legierungsgehalten verschiedene versprödende TCP-Phasen wie z. B. die Laves-Phasen, Sigma-Phasen oder die $\mu$-Phasen oder auch die versprödende $\eta\square$Phase oder $\square$-Phasen bilden (siehe z. B. Ralf Bürgel, Handbuch der Hochtemperaturwerkstofftechnik, 3. Auflage, Vieweg Verlag, Wiesbaden, 2006, Seite 370 - 374). Die Berechnung der Gleichgewichtsphasenanteile in Abhängigkeit von der Temperatur von z. B. für N06690 die Charge 111389 (siehe Tabelle 2 typische Zusammensetzungen) zeigen rechnerisch die Bildung von $\alpha$-Chrom (BCC Phase in Bild 2) unterhalb von 720 °C ($T_{s\,BCC}$) in großen Mengenanteilen. Diese Phase bildet sich aber dadurch, dass sie analytisch vom Grundmaterial sehr verschieden ist nur schwer. Ist allerdings die Bildungstemperatur $T_{s\,BCC}$ dieser Phase sehr hoch, so kann sie durchaus auftreten wie es z. B. in E. "Slevolden, J.Z. Albertsen. U. Fink, "Tjeldbergodden Methanol Plant: Metal Dusting Investigations," Corrosion/2011, paper no. 11144 (Houston, TX: NACE 2011), p. 15" für eine Variante von Alloy 693 UNS 06693 beschrieben wird. Bild 3 und Bild 4 zeigen die Phasendiagramme der Alloy 693 Varianten (aus US 4,88,125 Table1) Alloy 3 bzw. Alloy 10 aus Tabelle 2. Diese Phase ist spröde und führt zu einer unerwünschten Versprödung des Materials. Alloy 3 hat eine Bildungstemperatur $T_{s\,BCC}$ von 1079, Alloy 10 von 639. In "E. Slevolden, J.Z. Albertsen. U. Fink, Tjeldbergodden Methanol Plant: Metal Dusting Investigations," Corrosion/2011, paper no. 11144 (Houston, TX: NACE 2011), p. 15" wird die genaue Analyse der Legierung bei der $\alpha$-Chrom (BCC) auftritt nicht beschrieben. Es ist aber davon auszugehen, dass unter den in Tabelle 2 für Alloy 693 angeführten Beispielen, bei den Analysen, die rechnerisch die höchsten Bildungstemperaturen $T_{s\,BCC}$ haben (wie z.B. Alloy 10) sich $\alpha$-Chrom (BCC Phase bilden kann. Bei einer korrigierten Analyse (mit reduzierter Bildungstemperatur $T_{s\,BCC}$) wurde in "E. Slevolden, J.Z. Albertsen. U. Fink, Tjeldbergodden Methanol Plant: Metal Dusting Investigations," Corrosion/2011, paper no. 11144 (Houston, TX: NACE 2011), p. 15" $\alpha$-Chrom dann nur noch in Oberflächennähe beobachtet. Um das Auftreten einer solchen versprödenden Phase zu vermeiden, sollte, bei der erfindungsgemäßen Legierung die Bildungstemperatur $T_{S\,BCC}$ kleiner gleich 939°C - der niedrigsten Bildungstemperatur $T_{s\,BCC}$ unter den Beispielen für Alloy 693 in Tabelle 2 (aus US 4,88,125 Table 1) liegen.

Dies ist insbesondere der Fall, wenn die folgende Formel erfüllt ist:

$$Fp \leq 39,9 \text{ mit} \tag{3a}$$

$$Fp = Cr + 0{,}272{*}Fe + 2{,}36{*}Al + 2{,}22{*}Si$$

$$+\ 2{,}48{*}Ti + 0{,}374{*}Mo + 0{,}538{*}W - 11{,}8{*}C \tag{4a}$$

wobei Cr, Al, Fe, Si, Ti, Nb, Cu, Mo, W und C die Konzentration der betreffenden Elemente in Masse-% sind. Die Tabelle 2 mit den Legierungen nach dem Stand der Technik zeigt, dass Fp für Alloy 8, Alloy 3 und Alloy 2 größer 39,9 ist und für Alloy 10 gerade 39,9. Für alle anderen Legierungen mit $T_{s\,BCC}$ kleiner 939 °C ist Fp $\leq$ 39,9.

Verarbeitbarkeit

Beispielhaft wird hier für die Verarbeitbarkeit die Umformbarkeit betrachtet.

Eine Legierung kann durch mehrere Mechanismen gehärtet werden, so dass sie eine hohe Warmfestigkeit bzw. Kriechbeständigkeit hat. So bewirkt die Zulegierung eines anderen Elementes je nach Element eine mehr oder weniger große Erhöhung der Festigkeit (Mischkristallhärtung). Weitaus effektiver ist eine Erhöhung der Festigkeit durch feine Teilchen oder Ausscheidungen (Teilchenhärtung). Dies kann z. B. durch die $\square$' Phase erfolgen, die sich bei Zugaben von Al und weiteren Elementen wie z. B: Ti zu einer Nickel-Legierung bilden oder durch Karbide die sich durch Zugabe von Kohlenstoff zu einer Chrom-haltigen Nickel-Legierung bilden (siehe z. B. Ralf Bürgel, Handbuch der Hochtemperaturwerkstofftechnik, 3. Auflage, Vieweg Verlag, Wiesbaden, 2006, Seite 358 - 369).

Die Erhöhung des Gehaltes an die ☐' Phase bildenden Elemente bzw. des C-Gehaltes erhöht zwar die Warmfestigkeit, beeinträchtig aber zunehmend die Verformbarkeit, selbst im lösungsgeglühten Zustand.

Für einen sehr gut umformbaren Werkstoff werden Dehnungen A5 im Zugversuch bei Raumtemperatur von größer gleich 50 %, mindestens aber größer gleich 45 % angestrebt.

Dies wird insbesondere erreicht, wenn zwischen den Karbid bildenden Elementen Cr, Nb, Ti und C die folgende Beziehung erfüllt ist:

$$Fa \leq 60 \text{ mit} \tag{5a}$$

$$Fa = Cr + 6{,}15 * Nb + 20{,}4 * Ti + 201 * C \tag{6b}$$

wobei Cr, Nb, Ti und C die Konzentration der betreffenden Elemente in Masse-% sind.

Warmfestigkeit/Kriechfestigkeit

Gleichzeitig sollte die Dehngrenze bzw. die Zugfestigkeit bei höheren Temperaturen mindestens die Werte von Alloy 601 erreichen (siehe Tabelle 4):

$$600 \text{ °C: Dehngrenze } R_{p0{,}2} > 150 \text{ MPA; Zugfestigkeit } R_m > 500 \text{ MPA} \tag{9a, 9b}$$

$$800 \text{°C: Dehngrenze } R_{p0{,}2} > 130 \text{ MPA; Zugfestigkeit } R_m > 135 \text{ MPA} \tag{9c, 9d}$$

Wünschenswert wäre es, dass die Dehngrenze bzw. die Zugfestigkeit in den Bereich von Alloy 602 CA liegt (siehe Tabelle 4). Es sollten mindestens 3 der 4 folgenden Relationen erfüllt sein:

$$600 \text{ °C: Dehngrenze } R_{p0{,}2} > 250 \text{ MPA; Zugfestigkeit } R_m > 570 \text{ MPA} \tag{10a, 10b}$$

$$800 \text{°C: Dehngrenze } R_{p0{,}2} > 180 \text{ MPA; Zugfestigkeit } R_m > 190 \text{ MPA} \tag{10c, 10d}$$

Dies wird insbesondere erreicht, wenn die folgende Beziehung zwischen den hauptsächlich härtenden Elementen erfüllt ist:

$$Fk \geq 45 \text{ mit} \tag{7a}$$

$$Fk = Cr + 19 * Ti + 34{,}3 * Nb + 10{,}2 * Al + 12{,}5 * Si + 98 * C + 2245 * B \tag{8b}$$

wobei Cr, Ti, Nb, Al, Si, C und B die Konzentration der betreffenden Elemente in Masse-% sind.

Korrosionsbeständigkeit:

Die erfindungsgemäße Legierung soll eine gute Korrosionsbeständigkeit an Luft ähnlich der von Alloy 602CA (N06025) haben.

Beispiele:

Herstellung:

Zur Feststellung der Eigenschaften der Bauteile und Komponenten, die aus dem Pulver hergestellt werden, werden im Labormaßstab in einem Vakuumofen erschmolzene Legierungen verwendet.

Die Tabellen 3a und 3b zeigen die Analysen der im Labormaßstab erschmolzenen Chargen zusammen mit einigen zum Vergleich herangezogenen großtechnischen erschmolzenen Chargen nach dem Stand der Technik von Alloy 602CA (N06025), Alloy 690 (N06690), Alloy 601 (N06601). Die Chargen nach dem Stand der Technik sind mit einem T gekennzeichnet, die erfindungsgemäßen mit einem E. Die im Labormaßstab gekennzeichneten Chargen sind mit einem L gekennzeichnet, die großtechnisch erschmolzenen Chargen mit einem G.

Die Blöcke der im Labormaßstab im Vakuum erschmolzenen Legierungen in Tabelle 3a und b wurden zwischen 900°C und 1270°C für 8 h geglüht und mittels Warmwalzen und weiterer Zwischenglühungen zwischen 900°C und 1270°C für 0,1 bis 1 h an eine Enddicke von 13 mm bzw. 6 mm warmgewalzt. Die so erzeugten Bleche wurden zwischen 900°C und 1270°C für 1 h lösungsgeglüht. Aus diesen Blechen wurden die für die Messungen benötigten Proben hergestellt.

Bei den großtechnisch erschmolzenen Legierungen wurde aus der großtechnischen Fertigung von einem betrieblich gefertigten Blech mit passender Dicke ein Muster entnommen. Aus diesen Blechen wurden die für die Messungen benötigten Proben hergestellt.

Alle Legierungsvarianten hatten typischerweise eine Korngröße von 70 bis 300 $\mu$m.

Für die Beispielchargen in Tabelle 3a und b werden die folgenden Eigenschaften verglichen:

- Metal Dusting Beständigkeit als Beispiel für eine hohe Korrosionsbeständigkeit in einer hoch korrosiven Atmosphäre
- Phasenstabilität
- Die Umformbarkeit anhand des Zugversuches bei Raumtemperatur
- Die Warmfestigkeit / Kriechbeständigkeit mit Hilfe von Warmzugversuchen
- Die Korrosionsbeständigkeit mit Hilfe eines Oxidationstestes

Bei den im Labormaßstab erschmolzenen Chargen 2297 bis 2308 und 250060 bis 250149, insbesondere aber bei den erfindungsgemäßen mit E gekennzeichneten Chargen (2301, 250129, 250132, 250133, 250 134, 250137, 240138, 250147, 250148) ist die Formel (2a) Al + Cr $\geq$ 28 erfüllt. Sie erfüllen damit die Forderung die an die Metal Dusting Beständigkeit gestellt worden ist.

Für die ausgewählten Legierungen nach dem Stand der Technik in Tabelle 2 und alle Laborchargen (Tabellen 3a und 3b) wurden deshalb die Phasendiagramme berechnet und die Bildungstemperatur $T_{s\,BCC}$ in die Tabelle 2 und 3a eingetragen. Für die Zusammensetzungen in den Tabellen 2 bzw. 3a und b wurde auch der Wert für Fp gemäß Formel 4a berechnet. Fp ist umso größer, je größer die Bildungstemperatur $T_{s\,BCC}$ ist. Alle Beispiele von N06693 mit einer höheren Bildungstemperatur $T_{s\,BCC}$ als der von Alloy 10 haben ein Fp > 39,9. Die Forderung Fp $\leq$ 39,9 (Formel 3a) ist also ein gutes Kriterium, um eine ausreichende Phasenstabilität bei einer Legierung zu erhalten. Alle Laborchargen in Tabelle 3a und b erfüllen das Kriterium Fp $\leq$ 39,9.

In Tabelle 4 sind Dehngrenze $R_{p0,2}$, die Zugfestigkeit $R_m$ und die Dehnung $A_5$ für Raumtemperatur (RT) und für 600°C eingetragen, weiterhin die Zugfestigkeit $R_m$ für 800°C. Außerdem sind die Werte für Fa und Fk eingetragen.

Die Beispielchargen 156817 und 160483 der Legierung nach dem Stand der Technik Alloy 602 CA haben in Tabelle 4 eine vergleichsweise kleine Dehnung A5 bei Raumtemperatur von 36 bzw. 42 %, die unterhalb der Anforderungen für eine gute Umformbarkeit liegen. Fa ist größer 60 und damit oberhalb des Bereichs, der eine gute Umformbarkeit kennzeichnet. Alle erfindungsgemäßen Legierungen (E) zeigen eine Dehnung größer 50 %. Sie erfüllen damit die Anforderungen. Fa ist für alle erfindungsgemäßen Legierungen kleiner 60. Sie befinden sich damit in dem Bereich einer guten Umformbarkeit. Die Dehnung ist besonders hoch, wenn Fa vergleichsweise klein ist.

Die Beispielcharge 156658 der Legierung nach dem Stand der Technik Alloy 601 in Tabelle 4 ist ein Beispiel für die Mindestanforderungen an Dehngrenze und Zugfestigkeit bei 600°C bzw. 800°C, die Beispielchargen 156817 und 160483 der Legierung nach dem Stand der Technik Alloy 602 CA dagegen Beispiele für sehr guten Werte von Dehngrenze und Zugfestigkeit bei 600°C bzw. 800°C. Alloy 601 repräsentiert einen Werkstoff, der die Mindestanforderungen an Warmfestigkeit bzw. Kriechfestigkeit zeigt, die in den Relationen 9a bis 9d beschrieben werden, Alloy 602 CA einen Werkstoff der eine ausgezeichnete Warmfestigkeit bzw. Kriechfestigkeit zeigt, die in den Relationen 10a bis 10d beschrieben werden. Der Wert für Fk ist für beide Legierungen deutlich größer 45 und für Alloy 602 CA zusätzlich noch deutlich größer als der Wert von Alloy 601, was die erhöhten Festigkeitswerte von Alloy 602 CA widerspiegelt. Die erfindungsgemäßen Legierungen (E) zeigen alle eine Dehngrenze und Zugfestigkeit bei 600°C bzw. 800°C im Bereich oder deutlich oberhalb der von Alloy 601 haben also die Relationen 9a bis 9d erfüllt. Sie liegen im Bereich der Werte von Alloy 602 CA und erfüllen auch die wünschenswerten Anforderungen, also 3 der 4 Relationen 10a bis 10d. Auch Fk ist für alle erfindungsgemäßen Legierungen in den Beispielen in Tabelle 4 größer 45, ja sogar meisten größer 54 und damit in dem Bereich, der durch eine gute Warmfestigkeit bzw. Kriechbeständigkeit gekennzeichnet ist. Unter den nicht erfindungsgemäßen Laborchargen sind die Chargen 2297 und 2300 ein Beispiel, dass die Relationen 9a bis 9d nicht erfüllt und auch ein Fk kleiner 45 hat.

Tabelle 5 zeigt die spezifischen Massenänderungen nach einem Oxidationsversuch bei 1100 °C an Luft nach 11 Zyklen von 96 h also insgesamt 1056 h. Angegeben ist in der Tabelle 5 die spezifische Brutto- Massenänderung, die spezifische Netto-Massenänderung und spezifische Massenänderung der abgeplatzten Oxide nach 1056 h. Die Beispielchargen der Legierungen nach dem Stand der Technik Alloy 601 und Alloy 690 zeigten eine deutlich höhere Brutto Massenänderung als Alloy 602 CA, wobei die von Alloy 601 noch mal deutlich größer ist als die von Alloy 690. Beide bilden eine Chromoxidschicht, die schneller wächst als eine Aluminiumoxidschicht. Alloy 601 enthält noch ca. 1,3 % Al. Dieser Gehalt ist zu gering, um schon eine, wenn auch nur teilweise geschlossen Aluminiumoxidschicht zu bilden, weshalb das Aluminium im Innern des metallischen Materials unterhalb der Oxidschicht oxidiert (innere Oxidation) was eine im Vergleich zum Alloy 690 erhöhte Massenzunahme bewirkt. Alloy 602 CA hat ca. 2,3 % Aluminium. Damit kann sich bei dieser Legierung unterhalb der Chromoxidschicht eine zumindest teilweise geschlossene Aluminiumoxidschicht bilden. Dies reduziert das Wachstum der Oxidschicht merklich und damit auch die spezifische Massenzunahme. Alle erfindungsgemäßen Legierungen (E) enthalten mindestens 2 % Aluminium und haben damit eine ähnlich geringe bzw. geringere Brutto-Massenzunahme wie Alloy 602 CA. Auch zeigen alle erfindungsgemäßen Legierungen ähnlich der Beispielchargen von Alloy 602 CA Abplatzungen im Bereich der Messgenauigkeit, während Alloy 601 und Alloy 690 große Abplatzungen zeigen.

Die beanspruchten Grenzen für die erfindungsgemäße Verwendung der Legierung "E" als Pulver für die Additive Fertigung, lassen sich daher im Einzelnen wie folgt begründen:
Eine zu kleine Partikelgröße unterhalb von 5 $\mu$m verschlechtert das Fließverhalten und ist deshalb zu vermeiden, eine zu große Partikelgröße oberhalb von 250 $\mu$m verschlechtert das Verhalten bei der additiven Fertigung.

Eine zu geringe Schüttdichte von 2 g/cm$^2$ verschlechtert das Verhalten bei der additiven Fertigung. Die größtmögliche Schüttdichte von ca. 8 g/cm$^3$ ist durch die Dichte der Legierung gegeben.

Zu geringe Cr-Gehalte bedeuten, dass die Cr-Konzentration beim Einsatz der Legierung in einer korrosiven Atmosphäre sehr schnell unter die kritische Grenze sinkt, so dass sich keine geschlossene Chromoxidschicht mehr bilden kann. Deshalb ist 24 % Cr die untere Grenze für Chrom. Zu hohe Cr-Gehalte verschlechtern die Phasenstabilität der Legierung insbesondere bei den hohen Aluminiumgehalten von $\geq$ 1,8 %. Deshalb ist 33 % Cr als obere Grenze anzusehen.

Die Bildung einer Aluminiumoxidschicht unterhalb der Chromoxidschicht verringert die Oxidationsrate. Unterhalb von 1,8 % Al ist die Aluminiumoxidschicht zu lückenhaft, um ihre Wirkung voll zu entfalten. Zu hohe Al-Gehalte beeinträchtigen die Verarbeitbarkeit der Legierung. Deshalb bildet ein Al-Gehalt von 4,0 % die obere Grenze.

Die Kosten für die Legierung steigen mit der Reduzierung des Eisen-Gehalts. Unterhalb von 0,1 % steigen die Kosten überproportional, da spezielles Vormaterial eingesetzt werden muss. Deshalb ist 0,1 % Fe aus Kostengründen als untere Grenze anzusehen. Mit Erhöhung des Eisengehalts verringert sich die Phasenstabilität (Bildung von versprödenden Phasen), insbesondere bei hohen Chrom- und Aluminiumgehalten. Deshalb ist 7 % Fe eine sinnvolle obere Grenze um die Phasenstabilität der erfindungsgemäßen Legierung sicher zu stellen.

Si wird bei der Herstellung der Legierung benötigt. Es ist deshalb ein Mindestgehalt von 0,001 % notwendig. Zu hohe Gehalte wiederum beeinträchtigen die Verarbeitbarkeit und die Phasenstabilität, insbesondere bei hohen Aluminium- und Chromgehalten. Der Si-Gehalt ist deshalb auf 0,50 % beschränkt.

Es ist ein Mindestgehalt von 0,005 % Mn zur Verbesserung der Verarbeitbarkeit notwendig. Mangan wird auf 2,0 % begrenzt, da dieses Element die Oxidationsbeständigkeit reduziert.

Titan steigert die Hochtemperaturfestigkeit. Ab 0,60 % kann das Oxidationsverhalten verschlechtert werden, weshalb 0,60 % der Maximalwert ist.

Schon sehr geringe Mg-Gehalte und/oder Ca-Gehalte verbessern die Verarbeitung durch das Abbinden von Schwefel, wodurch das Auftreten von niedrig schmelzenden NiS Eutektika vermieden wird. Für Mg und oder Ca ist deshalb ein Mindestgehalt von 0,0002 % erforderlich. Bei zu hohen Gehalten können intermetallische Ni-Mg-Phasen bzw Ni-Ca-Phasen auftreten, die die Verarbeitbarkeit wieder deutlich verschlechtern. Der Mg-Gehalt und/oder Ca-Gehalt wird deshalb auf maximal 0,05 % begrenzt.

Es ist ein Mindestgehalt von 0,005 % C für eine gute Kriechbeständigkeit notwendig. C wird auf maximal 0,12 % begrenzt, da dieses Element ab diesem Gehalt die Verarbeitbarkeit durch die übermäßige Bildung von Primärkarbiden reduziert.

Es ist ein Mindestgehalt von 0,001 % N erforderlich, wodurch die Verarbeitbarkeit des Werkstoffs verbessert wird. N wird auf maximal 0,05 % begrenzt, da dieses Element die durch die Bildung von groben Karbonitriden die Verarbeitbarkeit reduziert.

Der Sauerstoffgehalt muss kleiner gleich 0,100 % sein, um die Herstellbarkeit und Verwendbarkeit der Legierung zu gewährleisten. Ein zu niedriger Sauerstoff-Gehalt erhöht die Kosten. Der Sauerstoff-Gehalt ist deshalb $\geq$ 0,0001 %.

Der Gehalt an Phosphor sollte kleiner gleich 0,030 % sein, da dieses grenzflächenaktive Element die Oxidationsbeständigkeit beeinträchtigt. Ein zu niedriger P-Gehalt erhöht die Kosten. Der P-Gehalt ist deshalb $\geq$ 0,001 %.

Die Gehalte an Schwefel sollten so gering wie möglich eingestellt werden, da dieses grenzflächenaktive Element die Oxidationsbeständigkeit beeinträchtigt. Es werden deshalb max. 0,010 % S festgelegt.

Molybdän wird auf max. 2,0 % begrenzt, da dieses Element die Oxidationsbeständigkeit reduziert.

Wolfram wird auf max. 2,0 % begrenzt, da dieses Element die Oxidationsbeständigkeit ebenfalls reduziert.

Für hoch korrosive Bedingungen, aber insbesondere für eine gute Metal Dusting Beständigkeit, ist es vorteilhaft, wenn die folgende Beziehung zwischen Cr und Al erfüllt ist:

$$Cr + Al \geq 28 \qquad (2a)$$

wobei Cr und Al die Konzentration der betreffenden Elemente in Masse-% sind. Nur dann ist der Gehalt an oxidbildenden Elementen hoch genug um eine ausreichenden Metal Dusting Beständigkeit zu gewährleisten.

Darüber hinaus muss die folgende Beziehung erfüllt sein, damit eine ausreichende Phasenstabilität gegeben ist:

$$Fp \leq 39,9 \text{ mit} \qquad (3a)$$

$$Fp = Cr + 0,272*Fe + 2,36*Al + 2,22*Si$$
$$+ 2,48*Ti + 0,374*Mo + 0,538*W - 11,8*C \qquad (4a)$$

wobei Cr, Fe, Al, Si, Ti, Mo, W und C die Konzentration der betreffenden Elemente in Masse-% sind. Die Grenzen für Fp und die mögliche Einbeziehung weiterer Elemente wurden im vorangegangenen Text ausführlich begründet.

Bedarfsweise kann mit Zusätzen von sauerstoffaffinen Elementen die Oxidationsbeständigkeit weiter verbessert werden. Sie tun dies, indem sie in die Oxidschicht mit eingebaut werden und dort auf den Korngrenzen die Diffusionswege des Sauerstoffs blockieren.

Es ist ein Mindestgehalt von 0,01 % Y notwendig, um die die Oxidationsbeständigkeit steigernde Wirkung des Y zu erhalten. Die Obergrenze wird aus Kostengründen bei 0,20 % gelegt.

Es ist ein Mindestgehalt von 0,001 % La notwendig, um die die Oxidationsbeständigkeit steigernde Wirkung des La zu erhalten. Die Obergrenze wird aus Kostengründen bei 0,20 % gelegt.

Es ist ein Mindestgehalt von 0,001 % Ce notwendig, um die die Oxidationsbeständigkeit steigernde Wirkung des Ce zu erhalten. Die Obergrenze wird aus Kostengründen bei 0,20 % gelegt.

Es ist ein Mindestgehalt von 0,001 % Ce Mischmetall notwendig, um die die Oxidationsbeständigkeit steigernde Wirkung des Ce Mischmetalls zu erhalten. Die Obergrenze wird aus Kostengründen bei 0,20 % gelegt.

Bedarfsweise kann Niob zugefügt werden, da auch Niob die Hochtemperaturfestigkeit steigert. Höhere Gehalte erhöhen die Kosten sehr stark. Die Obergrenze wird deshalb auf 1,10 % festgesetzt.

Bedarfsweise kann die Legierung auch Tantal enthalten, da auch Tantal die Hochtemperaturfestigkeit steigert. Höhere Gehalte erhöhen die Kosten sehr stark. Die Obergrenze wird deshalb auf 0,60 % festgesetzt. Es ist ein Mindestgehalt von 0,001 % erforderlich, um eine Wirkung zu erzielen.

Bedarfsweise kann die Legierung auch Zr erhalten. Es ist ein Mindestgehalt von 0,01 % Zr notwendig, um die die Hochtemperaturfestigkeit und die Oxidationsbeständigkeit steigernde Wirkung des Zr zu erhalten. Die Obergrenze wird aus Kostengründen bei 0,20 % Zr gelegt.

Zr kann bedarfsweise ganz oder teilweise durch Hf ersetzt werden, da auch dieses Element, wie das Zr, die Hochtemperaturfestigkeit und die Oxidationsbeständigkeit steigert. Das Ersetzen ist ab Gehalten von 0,001 % möglich. Die Obergrenze wird aus Kostengründen bei 0,20 % Hf gelegt.

Bedarfsweise kann der Legierung Bor zugesetzt werden, da Bor die Kriechbeständigkeit verbessert. Deshalb sollte ein Gehalt von mindestens 0,0001 % vorhanden sein. Gleichzeitig verschlechtert dieses grenzflächenaktive Element die Oxidationsbeständigkeit. Es werden deshalb max. 0,008 % Bor festgelegt.

Kobalt kann in dieser Legierung bis zu 5,0 % enthalten sein. Höhere Gehalte reduzieren die Oxidationsbeständigkeit merklich.

Kupfer wird auf max. 0,5 % begrenzt, da dieses Element die Oxidationsbeständigkeit reduziert.

Vanadium wird auf max. 0,5 % begrenzt, da dieses Element die Oxidationsbeständigkeit reduziert.

Pb wird auf max. 0,002 % begrenzt, da dieses Element die Oxidationsbeständigkeit reduziert. Das Gleiche gilt für Zn und Sn.

Des Weiteren kann wahlweise die folgende Beziehung für die karbidbildenden Elemente Cr, Ti und C erfüllt sein, die eine besonders gute Verarbeitbarkeit beschreibt:

$$Fa \leq 60 \text{ mit} \qquad (5a)$$

$$Fa = Cr + 20{,}4*Ti + 201*C \qquad \text{(6a)}$$

wobei Cr, Ti und C die Konzentration der betreffenden Elemente in Masse-% sind. Die Grenzen für Fa und die mögliche Einbeziehung weiterer Elemente wurden im vorangegangenen Text ausführlich begründet.

Des Weiteren kann wahlweise die folgende Beziehung zwischen den die Festigkeit steigernden Elementen erfüllt sein, die eine besonders gute Warmfestigkeit/ bzw. Kriechfestigkeit beschreibt:

$$Fk \ge 45 \text{ mit} \qquad \text{(7a)}$$

$$Fk = Cr + 19*Ti + 10{,}2*Al + 12{,}5*Si + 98*C \qquad \text{(8a)}$$

wobei Cr, Ti, Al, Si und C die Konzentration der betreffenden Elemente in Masse-% sind. Die Grenzen für Fa und die mögliche Einbeziehung weiterer Elemente wurden im vorangegangenen Text ausführlich begründet.

Figurenbeschreibung

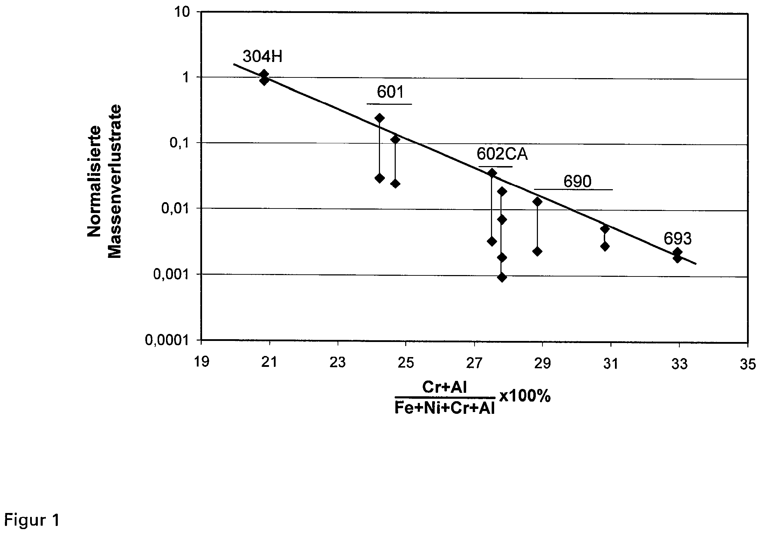

Figur 1   Metallverlust durch Metal Dusting als Funktion des Aluminium- und Chromgehaltes in einem stark aufkohlendem Gas mit 37 % CO, 9 % $H_2O$, 7 % $CO_2$, 46 % $H_2$, das $a_c$ = 163 und $p(0_2)$ = $2{,}510^{-27}$ hat. (aus (Hermse, C.G.M. and van Wortel, J.C.: Metal dusting: relationship between alloy composition and degradation rate. Corrosion Engineering, Science and Technology 44 (2009), p. 182 - 185)

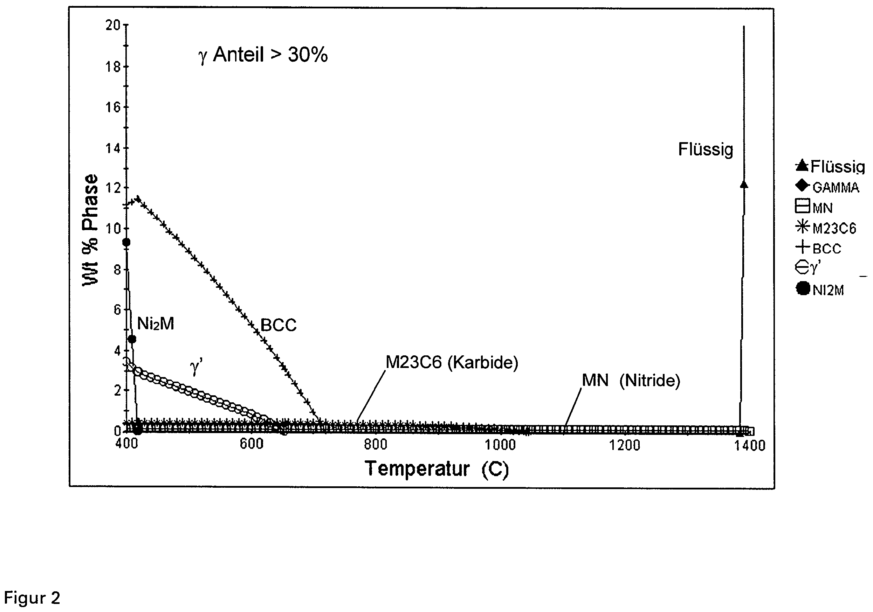

Figur 2   Mengenanteile der Phasen im thermodynamischen Gleichgewicht in Abhängigkeit von der Temperatur von alloy 690 (N06690) am Beispiel der typischen Charge 111389

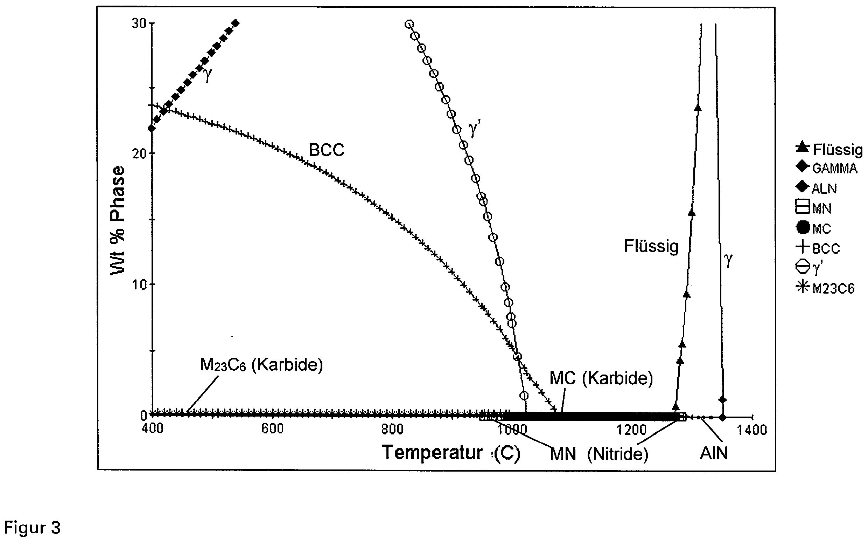

Figur 3   Mengenanteile der Phasen im thermodynamischen Gleichgewicht in Abhängigkeit von der Temperatur von Alloy 693 (N06693) am Beispiel von alloy 3 aus Tabelle 2

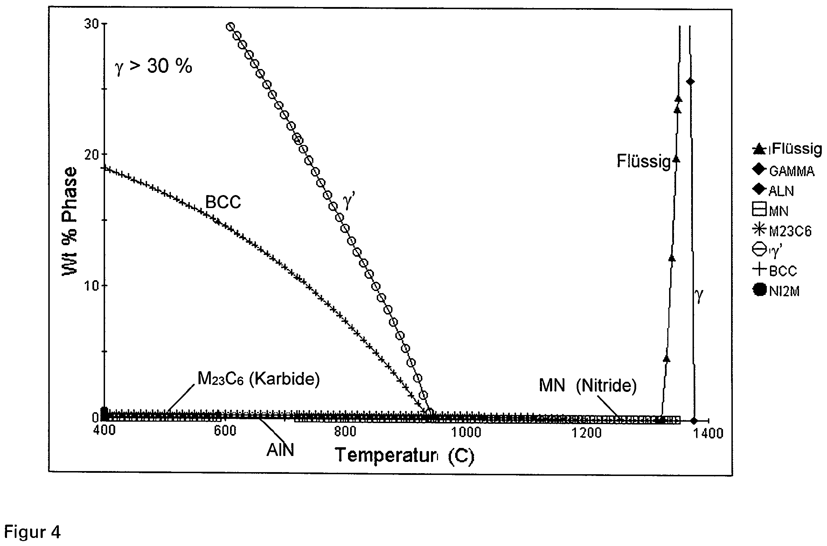

Figur 4   Mengenanteile der Phasen im thermodynamischen Gleichgewicht in Abhängigkeit von der Temperatur von Alloy 693 (N0669 3) am Beispiel von Alloy 10 aus Tabelle 2

Tabelle 1: Legierungen nach ASTM B 168-11 Alle Angaben in Masse-%,

| Legierung | Ni | Cr | Co | Mo | Nb | Fe | Mn | Al | C | Cu | Si | S | Ti | P | Zr | Y | B | N | Ce |
|---|---|---|---|---|---|---|---|---|---|---|---|---|---|---|---|---|---|---|---|
| **Alloy 600 - N06600** | 72,0 min | 14,0-17,0 | | | | 6,0-10,0 | 1,0 max | | 0,15 max | 0,5 max | 0,5 max | 0,015 max | | | | | | | |
| **Alloy 601 - N06601** | 58,0-63,0 | 21,0-25,0 | | | | Rest | 1,0 max | 1,0-1,7 | 0,10 max | 0,5 max | 0,5 max | 0,015 max | | | | | | | |
| **Alloy 617 - N06617** | 44,5 min | 20,0-24,0 | 10,0-15,0 | 8,0-10,0 | | 3,0 max | 1,0 max | 0,8-1,5 | 0,05-0,15 | 1,0 max | 0,5 max | 0,015 max | 0,6 max | | | | 0,006 max | | |
| **Alloy 690 - N06690** | 58,0 min | 27,0-31,0 | | | | 7,0-11,0 | 0,5 max | | 0,05 max | 0,5 max | 1,0 max | 0,015 max | | | | | | | |
| **Alloy 693 - N06693** | Rest | 27,0-31,0 | | | 0,5-2,5 | 2,5-6,0 | 1,0 max | 2,5-4,0 | 0,15 max | 0,5 max | 0,5 max | 0,01 max | 1,0 max | | | | | | |
| **Alloy 602CA - N06025** | Rest | 24,0-26,0 | | | | 8,0-11,0 | 0,15 max | 1,8-2,4 | 0,15-0,25 | 0,1 max | 0,5 max | 0,010 max | 0,1-0,2 | 0,020 max | 0,01-0,10 | 0,05-0,12 | | | |
| **Alloy 45 - N06045** | 45 min | 26,0-29,0 | | | | 21,0-25,0 | 1,0 max | | 0,05-0,12 | 0,3 max | 2,5-3,0 | 0,010 max | | 0,020 max | | | | | 0,03-0,09 |
| **Alloy 603 - N06603** | Rest | 24,0-26,0 | | | | 8,0-11,0 | 0,15 max | 2,4-3,0 | 0,20-0,40 | 0,50 max | 0,5 max | 0,010 max | 0,01-0,25 | 0,020 max | 0,01-0,10 | 0,01-0,15 | | | |
| **Alloy 696 - N06696** | Rest | 28,0-32,0 | | 1,0-3,0 | | 2,0-6,0 | 1,0 max | | 0,15 max | 1,5-3,0 | 1,0-2,5 | 0,010 max | 1,0 max | | | | | | |

Tabelle 2: Typische Zusammensetzungen von einigen Legierungen nach ASTM B 168-11 (Stand der Technik). Alle Angaben in Masse-%*) Legierungszusammensetzung aus Patent US 4,88,125 Table 1

| Legierung | Charge | C | S | Cr | Ni | Mn | Si | Mo | Ti | Nb | Cu | Fe | P | Al | Zr | Y | B | $T_{s\,BCC}$ in °C | Cr + Al | Fp |
|---|---|---|---|---|---|---|---|---|---|---|---|---|---|---|---|---|---|---|---|---|
| Alloy 600 N06600 | 164310 | 0,07 | 0,002 | 15,75 | 73,77 | 0,28 | 0,32 | | 0,2 | | 0,01 | 9,42 | 0,009 | 0,16 | | | 0,001 | | 15,9 | 19,1 |
| Alloy 601 N06601 | 156656 | 0,053 | 0,0016 | 22,95 | 59,58 | 0,72 | 0,24 | | 0,47 | | 0,04 | 14,4 | 0,008 | 1,34 | 0,015 | 0 | 0,001 | 669 | 24,3 | 31,2 |
| Alloy 690 N06690 | 111389 | 0,022 | 0,002 | 28,45 | 61,95 | 0,12 | 0,32 | | 0,29 | | 0,01 | 8,45 | 0,005 | 0,31 | | 0 | 0 | 720 | 28,8 | 32,7 |
| Alloy 693 N06693 | Alloy 10 *) | 0,015 | ≤ 0,01 | 29,42 | 60,55 | 0,014 | 0,075 | | 0,02 | 1,04 | 0,03 | 5,57 | | 3,2 | | | 0,002 | 939 | 32,6 | 39,9 |
| Alloy 693 N06693 | Alloy 8 *) | 0,007 | ≤ 0,01 | 30,00 | 60,34 | 0,11 | 0,38 | | 0,23 | 1,13 | 0,03 | 4,63 | | 3,08 | | | 0,002 | 979 | 33,1 | 41,3 |
| Alloy 693 N06693 | Alloy 3 *) | 0,009 | ≤ 0,01 | 30,02 | 57,79 | 0,01 | 0,14 | | 0,02 | 2,04 | 0,03 | 5,57 | | 4,3 | | | 0,002 | 1079 | 34,3 | 44,5 |
| Alloy 693 N06693 | Alloy 2 *) | 0,006 | ≤ 0,01 | 30,01 | 60,01 | 0,12 | 0,14 | | 0,01 | 0,54 | 0,03 | 5,80 | | 3,27 | | | 0,002 | 948 | 33,3 | 40,3 |
| Alloy 602 N06025 | 163968 | 0,170 | ≤ 0,01 | 25,39 | 62,12 | 0,07 | 0,07 | | 0,13 | | 0,01 | 9,47 | 0,008 | 2,25 | 0,08 | 0,08 | 0,005 | 690 | 27,6 | 31,8 |
| Alloy 603 N06603 | 52475 | 0,225 | 0,002 | 25,20 | 61,6 | 0,09 | 0,03 | | 0,16 | 0,01 | 0,01 | 9,6 | 0,007 | 2,78 | 0,07 | 0,08 | 0,003 | 707 | 28,0 | 32,2 |
| Alloy 696 N06696 | UNS Mitte | 0,080 | ≤ 0,01 | 30,00 | 61,20 | 0,1 | 1,5 | 2 | 0,1 | | 2 | 3 | | | | | | 792 | 30,0 | 35,1 |

EP 3 775 308 B1

Tabelle 3a: Zusammensetzung der Laborchargen, Teil 1. Alle Angaben in Masse-% (T: Legierung nach dem Stand der Technik, E: erfindungsgemäße Legierung, L: im Labormaßstab erschmolzen, G: großtechnisch erschmolzen)

| | | Name | Chg | C | N | Cr | Ni | Mn | Si | Mo | Ti | Nb | Cu | Fe | Al | W | $T_{s BC}$ c in °C | Cr+Al | Fp |
|---|---|---|---|---|---|---|---|---|---|---|---|---|---|---|---|---|---|---|---|
| T | G | Alloy 602 CA | 156817 | 0,171 | 0,036 | 25,2 | 62,1 | 0,06 | 0,07 | 0,01 | 0,17 | <0,01 | 0,01 | 9,6 | 2,36 | - | 683 | 27,6 | 31,9 |
| T | G | Alloy 602 CA | 160483 | 0,172 | 0,025 | 25,7 | 62,0 | 0,06 | 0,05 | 0,02 | 0,14 | 0,01 | 0,01 | 9,4 | 2,17 | -- | 683 | 27,8 | 31,8 |
| T | G | Alloy 601 | 156656 | 0,053 | 0,018 | 23,0 | 59,6 | 0,72 | 0,24 | 0,04 | 0,47 | 0,01 | 0,04 | 14,4 | 1,34 | 0,01 | 669 | 24,3 | 31,2 |
| T | G | Alloy 690 | 80116 | 0,010 | 0,025 | 27,8 | 62,8 | 0,18 | 0,15 | 0,01 | 0,31 | <0,01 | 0,01 | 8,5 | 0,14 | - | 683 | 27,9 | 31,4 |
| T | G | Alloy 690 | 111389 | 0,022 | 0,024 | 28,5 | 62,0 | 0,12 | 0,32 | <0,01 | 0,29 | 0,01 | 0,01 | 8,5 | 0,31 | - | 720 | 28,8 | 32,7 |
| | L | Cr30Al1La | 2297 | 0,018 | 0,023 | 29,9 | 68,0 | 0,25 | 0,09 | <0,01 | <0,01 | <0,01 | <0,01 | 0,56 | 1,04 | <0,01 | 737 | 30,9 | 32,5 |
| | L | Cr30Al1LaT | 2300 | 0,019 | 0,021 | 30,2 | 67,5 | 0,25 | 0,08 | <0,01 | <0,01 | <0,01 | <0,01 | 0,54 | 1,3 | <0,01 | 737 | 31,5 | 33,3 |
| | L | Cr30Al1TiLa | 2298 | 0,018 | 0,022 | 29,9 | 67,5 | 0,25 | 0,08 | <0,01 | 0,3 | <0,01 | <0,01 | 0,55 | 1,28 | <0,01 | 759 | 31,2 | 33,8 |
| | L | Cr30Al1 TiNbLa | 2308 | 0,017 | 0,028 | 30,1 | 67,1 | 0,25 | 0,08 | <0,01 | 0,31 | 0,28 | <0,01 | 0,53 | 1,25 | 0,01 | 772 | 31,4 | 34,3 |
| | L | Cr30Al1CLaTi | 2299 | 0,060 | 0,021 | 30,1 | 67,6 | 0,25 | 0,09 | <0,01 | 0,01 | <0,01 | <0,01 | 0,54 | 1,25 | 0,01 | 730 | 31,3 | 32,7 |
| | L | Cr30Al1CLa | 2302 | 0,049 | 0,02 | 30,1 | 67,1 | 0,26 | 0,09 | <0,01 | <0,01 | <0,01 | <0,01 | 0,57 | 1,65 | <0,01 | 730 | 31,8 | 33,8 |
| E | L | Cr30Al2La | 2301 | 0,015 | 0,021 | 30,2 | 66,6 | 0,25 | 0,08 | <0,01 | <0,01 | <0,01 | <0,01 | 0,54 | 2,25 | <0,01 | 809 | 32,4 | 35,6 |
| | L | Cr30Al1Ti | 250060 | 0,017 | 0,027 | 29,6 | 67,9 | 0,24 | 0,11 | <0,01 | 0,31 | <0,01 | <0,01 | 0,54 | 1,16 | 0,01 | 759 | 30,8 | 33,3 |
| | L | Cr30Al1Ti | 250063 | 0,017 | 0,024 | 29,9 | 67,4 | 0,25 | 0,10 | <0,01 | 0,31 | <0,01 | <0,01 | 0,53 | 1,39 | <0,01 | 759 | 31,3 | 34,2 |
| | L | Cr30Al1TiNb | 250066 | 0,016 | 0,022 | 29,9 | 67,1 | 0,24 | 0,09 | <0,01 | 0,31 | 0,31 | <0,01 | 0,50 | 1,42 | 0,01 | 772 | 31,3 | 34,6 |
| | L | Cr30Al1TiNb | 250065 | 0,017 | 0,025 | 30,3 | 67,1 | 0,24 | 0,10 | 0,01 | 0,3 | 0,31 | <0,01 | 0,05 | 1,41 | 0,01 | 768 | 31,7 | 34,8 |
| | L | Cr30Al1 TiNbZr | 250067 | 0,019 | 0,020 | 29,7 | 67,2 | 0,25 | 0,10 | 0,02 | 0,31 | 0,31 | <0,01 | 0,53 | 1,47 | 0,01 | 776 | 31,1 | 34,4 |
| | L | Cr30Al1TiNb | 250068 | 0,017 | 0,024 | 29,8 | 66,6 | 0,25 | 0,09 | 0,01 | 0,31 | 0,88 | <0,01 | 0,53 | 1,43 | 0,02 | 799 | 31,2 | 35,2 |
| E | L | Cr28Al2 | 250129 | 0,018 | 0,025 | 28,2 | 68,3 | 0,25 | 0,10 | <0,01 | <0,01 | <0,01 | 0,01 | 0,57 | 2,51 | <0,01 | 740 | 30,7 | 34,3 |
| E | L | Cr28Al2Y | 250130 | 0,022 | 0,022 | 28,1 | 68,6 | 0,25 | 0,07 | <0,01 | <0,01 | <0,01 | <0,01 | 0,51 | 2,61 | <0,01 | 766 | 30,7 | 34,3 |
| E | L | Cr28Al2YC1 | 250132 | 0,059 | 0,022 | 28,3 | 68,2 | 0,27 | 0,06 | <0,01 | <0,01 | 0,01 | 0,02 | 0,60 | 2,61 | 0,02 | 762 | 30,9 | 34,1 |
| E | L | Cr28Al2Nb.5C1 | 250133 | 0,047 | 0,022 | 28,3 | 67,7 | 0,25 | 0,06 | 0,01 | <0,01 | 0,50 | 0,02 | 0,52 | 2,76 | 0,02 | 800 | 31,1 | 35,2 |
| E | L | Cr28Al2Nb.5C1 | 250148 | 0,049 | 0,019 | 27,9 | 67,9 | 0,26 | 0,07 | <0,01 | <0,01 | 0,56 | 0,03 | 0,48 | 2,62 | 0,01 | 779 | 30,5 | 34,5 |

EP 3 775 308 B1

(fortgesetzt)

| | | Name | Chg | C | N | Cr | Ni | Mn | Si | Mo | Ti | Nb | Cu | Fe | Al | W | $T_s$ BC c in °C | Cr+Al | Fp |
|---|---|---|---|---|---|---|---|---|---|---|---|---|---|---|---|---|---|---|---|
| E | L | Cr28Al2Nb1C1 | 250134 | 0,048 | 0,026 | 28,2 | 67,1 | 0,26 | 0,09 | 0,02 | <0,01 | 1,06 | 0,03 | 0,48 | 2,84 | 0,02 | 830 | 31,1 | 36,1 |
| E | L | Cr28Al2Nb1C1 | 250147 | 0,045 | 0,017 | 28,4 | 67,5 | 0,27 | 0,07 | 0,02 | <0,01 | 0,90 | 0,02 | 0,43 | 2,15 | 0,02 | 774 | 30,5 | 34,3 |
| E | L | Cr28Al2Nb1C1Y | 250149 | 0,054 | 0,020 | 27,9 | 67,2 | 0,27 | 0,06 | 0,01 | <0,01 | 1,04 | 0,03 | 0,45 | 2,64 | <0,01 | 800 | 30,6 | 35,1 |
| E | L | Cr28Al2TiC1 | 250137 | 0,063 | 0,024 | 28,2 | 67,7 | 0,27 | 0,09 | <0,01 | 0,15 | <0,01 | 0,03 | 0,5 | 2,88 | <0,01 | 788 | 31,0 | 34,9 |
| E | L | Cr28Al2TiC1 | 250138 | 0,053 | 0,018 | 28,3 | 68,4 | 0,27 | 0,05 | <0,01 | 0,16 | <0,01 | 0,03 | 0,45 | 2,62 | 0,01 | 774 | 30,9 | 34,5 |

Tabelle 3b: Zusammensetzung der Laborchargen, Teil 2. Alle Angaben in Masse-% (Für alle Legierungen gilt: Pb: max. 0,002 %, Zn: max. 0,002 %, Sn: max. 0,002 %) (Bedeutung von T, E, G, L, siehe Tabelle 3a)

| | | Name | Chq | S | P | Mg | Ca | V | Zr | Co | Y | La_ | B | Hf | T | Ce | O |
|---|---|---|---|---|---|---|---|---|---|---|---|---|---|---|---|---|---|
| T | G | Alloy 602 CA | 156817 | 0,002 | 0,005 | 0,004 | 0,001 | 0,03 | 0,08 | 0,05 | 0,060 | - | 0,003 | - | - | - | 0,001 |
| T | G | Alloy 602 CA | 160483 | <0,002 | 0,007 | 0,010 | 0,002 | - | 0,09 | 0,04 | 0,070 | - | 0,003 | - | - | - | 0,001 |
| T | G | Alloy 601 | 156656 | 0,002 | 0,008 | 0,012 | <0,01 | 0,03 | 0,015 | 0,04 | - | - | 0,001 | - | - | - | 0,0001 |
| T | G | Alloy 690 | 80116 | 0,002 | 0,006 | 0,030 | 0,0009 | - | <0,002 | 0,02 | - | - | 0,002 | - | - | - | 0,0005 |
| T | G | Alloy 690 | 111389 | 0,002 | 0,005 | <0,001 | 0,0005 | - | - | 0,01 | - | - | - | - | - | - | 0,001 |
| | L | Cr30Al1La | 2297 | 0,004 | 0,003 | 0,015 | <0,01 | <0,01 | <0,002 | - | <0,001 | 0,062 | <0,001 | <0,001 | <0,005 | 0,001 | 0,0001 |
| | L | Cr30Al1LaT | 2300 | 0,003 | 0,002 | 0,014 | <0,01 | <0,01 | <0,002 | <0,001 | <0,001 | 0,051 | <0,001 | <0,001 | <0,005 | 0,001 | 0,0001 |
| | L | Cr30Al1TiLa | 2298 | 0,004 | 0,002 | 0,016 | <0,01 | <0,01 | <0,002 | <0,001 | <0,001 | 0,058 | <0,001 | <0,001 | <0,005 | 0,001 | 0,002 |
| | L | Cr30Al1TiNbLa | 2308 | 0,002 | 0,002 | 0,014 | <0,01 | <0,01 | <0,002 | - | <0,001 | 0,093 | <0,001 | <0,001 | <0,005 | 0,001 | 0,002 |
| | L | Cr30Al1CLaTi | 2299 | 0,003 | 0,002 | 0,015 | <0,01 | <0,01 | <0,002 | <0,001 | <0,001 | 0,064 | <0,001 | <0,001 | <0,005 | 0,001 | 0,002 |
| | L | Cr30Al1CLa | 2302 | 0,003 | 0,002 | 0,013 | <0,01 | <0,01 | <0,002 | 0,001 | <0,001 | 0,057 | <0,001 | <0,001 | <0,005 | 0,001 | 0,0001 |
| E | L | Cr30Al2La | 2301 | 0,003 | 0,002 | 0,015 | <0,01 | <0,01 | <0,002 | <0,001 | <0,001 | 0,058 | <0,001 | <0,001 | <0,005 | 0,001 | 0,002 |
| | L | Cr30Al1Ti | 250060 | 0,003 | 0,002 | 0,009 | <0,01 | <0,01 | <0,002 | <0,001 | <0,001 | <0,001 | <0,001 | <0,001 | <0,005 | <0,001 | 0,003 |
| | L | Cr30Al1Ti | 250063 | 0,003 | 0,003 | 0,012 | <0,01 | <0,01 | <0,002 | <0,001 | <0,001 | <0,001 | <0,001 | <0,001 | <0,005 | <0,001 | 0,003 |
| | L | Cr30Al1TiNb | 250066 | 0,002 | 0,002 | 0,012 | <0,01 | <0,01 | <0,002 | <0,001 | <0,001 | <0,001 | <0,001 | <0,001 | <0,005 | <0,001 | 0,004 |
| | L | Cr30Al1TiNb | 250065 | 0,002 | 0,002 | 0,012 | <0,01 | <0,01 | <0,002 | <0,001 | <0,001 | <0,001 | <0,001 | <0,001 | <0,005 | <0,001 | 0,005 |
| | L | Cr30Al1TiNbZr | 250067 | 0,003 | 0,002 | 0,010 | <0,01 | <0,01 | 0,069 | <0,001 | <0,001 | <0,001 | <0,001 | <0,001 | <0,005 | <0,001 | 0,003 |
| | L | Cr30Al1TiNb | 250068 | 0,002 | <0,002 | 0,010 | <0,01 | <0,01 | <0,002 | <0,001 | <0,001 | <0,001 | <0,001 | <0,001 | <0,005 | <0,001 | 0,004 |
| E | L | Cr28Al2 | 250129 | 0,004 | 0,003 | 0,011 | 0,0002 | <0,01 | <0,002 | - | - | - | <0,0005 | - | - | - | 0,001 |
| E | L | Cr28Al2Y | 250130 | 0,003 | 0,003 | 0,013 | <0,0002 | <0,01 | <0,002 | - | 0,063 | - | <0,0005 | - | - | - | 0,001 |
| E | L | Cr28Al2YC1 | 250132 | 0,003 | 0,004 | 0,009 | 0,0012 | 0,01 | 0,003 | <0,01 | 0,07 | - | 0,001 | - | - | - | 0,001 |
| E | L | Cr28Al2Nb.5C1 | 250133 | 0,005 | 0,003 | 0,009 | 0,0012 | <0,01 | 0,004 | 0,01 | 0,01 | - | - | - | - | - | 0,001 |
| E | L | Cr28Al2Nb.5C1 | 250148 | 0,004 | 0,004 | 0,010 | 0,0005 | 0,01 | - | <0,01 | <0,01 | - | - | - | - | - | 0,003 |
| E | L | Cr28Al2Nb1C1 | 250134 | 0,006 | 0,002 | 0,009 | 0,0009 | <0,01 | 0,006 | 0,01 | 0,01 | - | <0,0005 | - | - | - | 0,003 |
| E | L | Cr28Al2Nb1C1 | 250147 | 0,002 | 0,002 | 0,010 | 0,0005 | <0,01 | 0,01 | 0,01 | 0,01 | - | 0,0012 | - | - | - | 0,001 |

EP 3 775 308 B1

22

(fortgesetzt)

| | | Name | Chq | S | P | Mg | Ca | V | Zr | Co | Y | La_ | B | Hf | T | Ce | O |
|---|---|---|---|---|---|---|---|---|---|---|---|---|---|---|---|---|---|
| E | L | Cr28Al2Nb1C1Y | 250149 | 0,004 | 0,005 | 0,013 | <0,0005 | <0,01 | 0,006 | <0,01 | 0,08 | - | 0,0012 | - | - | - | 0,002 |
| E | L | Cr28Al2TiC1 | 250137 | 0,005 | 0,004 | 0,008 | 0,0002 | <0,01 | 0,004 | <0,01 | <0,01 | - | 0,0012 | - | - | - | 0,001 |
| E | L | Cr28Al2TiC1 | 250138 | 0,005 | 0,004 | 0,010 | 0,0002 | <0,01 | 0,003 | 0,01 | <0,01 | - | 0,0012 | - | - | - | 0,004 |

Tabelle 4: Ergebnisse der Zugversuche bei Raumtemperatur (RT), 600 °C und 800°C. Die Umformgeschwindigkeit betrug bei $R_{p0,2}$ 8,33 $10^{-5}$ 1/s (0,5%/min) und bei $R_m$ 8,33 $10^{-4}$ 1/s (5%/min); KG = Korngröße.

| | Name | Chg | KG in μm | $R_{p02}$ in MPa RT | $R_m$ in MPa RT | $A_5$ in % RT | $R_{p02}$ in MPa 600°C | $R_m$ in MPa 600°C | $A_5$ in % 600°C | $R_{p02}$ in MPa 800°C | $R_m$ in MPa 800°C | Fa | Fk |
|---|---|---|---|---|---|---|---|---|---|---|---|---|---|
| T | Alloy 602 CA | 156817 | 76 | 292 | 699 | 36 | 256 | 578 | 41 | 186 | 198 | 63,0 | 76,9 |
| T | Alloy 602 CA | 160483 | 76 | 340 | 721 | 42 | 254 | 699 | 69 | 186 | 197 | 62,2 | 79,6 |
| T | Alloy601 | 156656 | 136 | 238 | 645 | 53 | **154** | **509** | **54** | 133 | **136** | 43,3 | 56,3 |
| T | Aloy 690 | 80116 | 92 | 279 | 641 | 56 | 195 | 469 | 48 | 135 | 154 | 36,2 | 41,6 |
| T | Alloy 690 | 111389 | 72 | 285 | 630 | 50 | 188 | 465 | 51 | | | 36,8 | 43,6 |
| | Cr30Al1La | 2297 | 233 | 221 | 637 | 67 | 131 | 460 | 61 | 134 | 167 | 33,5 | 43,4 |
| | Cr30Al1LaT | 2300 | 205 | 229 | 650 | 71 | 131 | 469 | 65 | 132 | 160 | 33,9 | 46,3 |
| | Cr30Al1TiLa | 2298 | 94 | 351 | 704 | 59 | 228 | 490 | 31 | 149 | 161 | 39,7 | 51,5 |
| | Cr30Al1TiNbLa | 2308 | 90 | 288 | 683 | 55 | 200 | 508 | 39 | 174 | 181 | 41,6 | 61,0 |
| | Cr30Al1CLaTi | 2299 | 253 | 258 | 661 | 62 | 212 | 475 | 59 | 181 | 185 | 42,3 | 50,0 |
| | Cr30Al1CLa | 2302 | 212 | 353 | 673 | 59 | 233 | 480 | 59 | 189 | 194 | 40,0 | 52,9 |
| E | Cr30Al2La | 2301 | 155 | 375 | 716 | 66 | **298** | 504 | **49** | **275** | **277** | 33,2 | 55,6 |
| | Cr30Al1Ti | 250060 | 114 | 252 | 662 | 67 | 183 | 509 | 62 | 143 | 154 | 39,3 | 50,4 |
| | Cr30Al1Ti | 250063 | 118 | 252 | 659 | 70 | 178 | 510 | 57 | 148 | 152 | 39,6 | 52,9 |
| | Cr30Al1TiNb | 250066 | 121 | 240 | 666 | 67 | 186 | 498 | 66 | 245 | 255 | 41,4 | 63,6 |
| | Cr30Al1TiNb | 250065 | 132 | 285 | 685 | 61 | 213 | 521 | 58 | 264 | 265 | 41,8 | 64,0 |
| | Cr30Al1TiNbZr | 250067 | 112 | 287 | 692 | 67 | 227 | 532 | 65 | *280* | 280 | 41,6 | 64,2 |
| | Cr30Al1TiNb | 250068 | 174 | 261 | 666 | 69 | 205 | 498 | 65 | 297 | 336 | 44,9 | 83,2 |
| E | Cr28Al2 | 250129 | 269 | 334 | 674 | 66 | | | | 191 | 224 | 31,8 | 56,8 |
| E | Cr28Al2Y | 250130 | 167 | 322 | 693 | 63 | **252** | **522** | **53** | **220** | **244** | 32,6 | 57,9 |
| E | Cr28Al2YC1 | 250132 | 189 | 301 | 669 | 65 | | | | **226** | **226** | 40,2 | 64,0 |
| E | Cr28Al2Nb.5C1 | 250133 | 351 | 399 | 725 | 57 | **334** | 522 | **33** | **285** | **353** | 40,8 | 78,9 |
| E | Cr28Al2Nb.5C1 | 250148 | 365 | 353 | 704 | 60 | **284** | 523 | **58** | **259** | **344** | 41,2 | 79,5 |

(fortgesetzt)

| | Name | Chg | KG in µm | $R_{p02}$ in MPa RT | $R_m$ in MPa RT | $A_5$ in % RT | $R_{p02}$ in MPa 600°C | $R_m$ in MPa 600°C | $A_5$ in % 600°C | $R_{p02}$ in MPa 800°C | $R_m$ in MPa 800°C | Fa | Fk |
|---|---|---|---|---|---|---|---|---|---|---|---|---|---|
| E | **Cr28Al2Nb1C1** | 250134 | 384 | 448 | 794 | 59 | **410** | **579** | **28** | **343** | **377** | 44,4 | 99,4 |
| E | **Cr28Al2Nb1C1** | 250147 | 350 | 372 | 731 | 57 | **306** | 547 | **49** | **309** | 384 | 43,0 | 89,1 |
| E | **Cr28Al2Nb1C1Y** | 250149 | 298 | 415 | 784 | 53 | **339** | 528 | **27** | **340** | 400 | 45,1 | 99,2 |
| E | **Cr28Al2TiC1** | 250137 | 142 | 379 | 745 | 59 | **327** | 542 | **29** | **311** | 314 | 44,0 | 70,4 |
| E | **Cr28Al2TiC1** | 250138 | 224 | 348 | 705 | 61 | **278** | 510 | **46** | 247 | 296 | 42,2 | 66,5 |

Tabelle 5: Ergebnisse der Oxidationsversuche bei 1000 °C an Luft nach 1056 h.

| | Name | Chg | Versuch Nr | $m_{brutto}$ in g/m² | $m_{netto}$ in g/m² | $m_{spall}$ in g/m² |
|---|---|---|---|---|---|---|
| T | Alloy 602 CA | 160483 | 412 | 8,66 | 7,83 | 0,82 |
| T | Alloy 602 CA | 160483 | 425 | 5,48 | 5,65 | -0,18 |
| T | Alloy 601 | 156125 | 403 | 51,47 | 38,73 | 12,74 |
| T | Alloy 690 | 111389 | 412 | 23,61 | 7,02 | 16,59 |
| T | Alloy 690 | 111389 | 421 | 30,44 | -5,70 | 36,14 |
| T | Alloy 690 | 111389 | 425 | 28,41 | -0,68 | 29,09 |
| | Cr30Al1La | 2297 | 412 | 36,08 | -7,25 | 43,33 |
| | Cr30Al1LaT | 2300 | 412 | 41,38 | -2,48 | 43,86 |
| | Cr30Al1TiLa | 2298 | 412 | 49,02 | -30,59 | 79,61 |
| | Cr30Al1TiNbLa | 2306 | 412 | 40,43 | 16,23 | 24,20 |
| | Cr30Al1CLaTi | 2308 | 412 | 42,93 | -15,54 | 58,47 |
| | Cr30Al1CLa | 2299 | 412 | 30,51 | 0,08 | 30,44 |
| | Cr30Al2La | 2302 | 412 | 27,25 | 9,57 | 17,68 |
| E | Cr30Al1Ti | 2301 | 412 | 8,43 | 6,74 | 1,69 |
| | Cr30Al1Ti | 250060 | 421 | 43,30 | -19,88 | 63,17 |
| | Cr30Al1TiNb | 250063 | 421 | 32,81 | -22,15 | 54,96 |
| | Cr30Al1TiNb | 250066 | 421 | 26,93 | -16,35 | 43,28 |
| | Cr30Al1TiNbZr | 250065 | 421 | 25,85 | -24,27 | 50,12 |
| | Cr30Al1TiNb | 250067 | 421 | 41,59 | -15,56 | 57,16 |
| | Cr28Al2 | 250068 | 421 | 42,69 | -39,26 | 81,95 |
| E | Cr28Al2Y | 250129 | 425 | 3,72 | 3,55 | 0,16 |
| E | Cr28Al2YC1 | 250130 | 425 | 4,68 | 4,90 | -0,23 |
| E | Cr28Al2Nb.5C1 | 250132 | 425 | 3,94 | 5,01 | -1,07 |
| E | Cr28Al2Nb.5C1 | 250133 | 425 | 2,56 | 3,98 | -1,42 |
| E | Cr28Al2Nb1C1 | 250148 | 425 | 3,15 | 3,21 | -0,07 |
| E | Cr28Al2Nb1C1 | 250134 | 425 | 3,34 | 4,23 | -0,89 |
| E | Cr28Al2Nb1C1Y | 250147 | 425 | 2,72 | 2,62 | 0,10 |
| E | Cr28Al2TiC1 | 250149 | 425 | 3,44 | 3,84 | -0,40 |
| E | Cr28Al2TiC1 | 250137 | 425 | 3,62 | 4,24 | -0,62 |
| E | Cr30Al1La | 250138 | 425 | 3,87 | 4,28 | -0,41 |

**Patentansprüche**

1. Verwendung einer Nickel-Chrom-Aluminium-Legierung als Pulver für die Additive Fertigung, wobei das Pulver aus sphärischen Partikel einer Größe von 5 bis 250 μm besteht, und wobei diese Legierung aus (in Gew.-%) 24 bis 33 % Chrom, 1,8 bis 4,0 % Aluminium, 0,10 bis 7,0 % Eisen, 0,001 bis < 0,05 % Silizium, 0,005 bis < 0,05 % Mangan, 0,00 bis 0,60% Titan, jeweils 0,0 bis 0,05 % Magnesium und/oder Kalzium, 0,005 bis 0,12 % Kohlenstoff, 0,001 bis 0,050 % Stickstoff, 0,00001 - 0,100 % Sauerstoff, 0,001 bis 0,030 % Phosphor, max. 0,010 % Schwefel, max. 2,0 % Molybdän, max. 2,0 % Wolfram, wahlweise mit Gehalten an Yttrium von 0,0 - 0,2 %, Cer von 0,0 - 0,02 , Niob vom 0,0 - 1,1 %, Zirkon von 0,0 - 0,20 %, Bor von 0,0001 - 0,008 %, des Weiteren wahlweise enthaltend Kobalt 0,0 - 5,0 %, Kupfer max. 0,5 %, Rest Nickel und den üblichen verfahrensbedingten Verunreinigungen in Gehalten von max. 0,002 % Pb, max. 0,002 % Zn, max. 0,002 % Sn besteht, wobei das Pulver bei einer Porengröße > 1 $\mu$m Gesamteinschüsse von 0,0 - 4 % Porenfläche ha, wobei die Partikel eine Größe von 5 - 150 $\mu$m, insbesondere 10 - 150 $\mu$m, aufweisen, wobei das Pulver eine Schüttdichte von 2 bis zur Dichte der Legierung von max. 8 g / cm$^3$ hat und wobei folgende Beziehung erfüllt sein muss:

$$Fp \leq 39,9$$

mit

$$Fp = Cr + 0{,}272*Fe + 2{,}36*Al + 2{,}22*Si + 2{,}48*Ti \qquad (3a)$$

$$+ 0{,}374* Mo + 0{,}538*W - 11{,}8*C \qquad (4a)$$

wobei Cr, Fe, Al, Si, Ti, Mo, W und C die Konzentration der betreffenden Elemente in Masse-% sind.

2. Verwendung nach Anspruch 1, wobei das Pulver mittels einer Vakuuminertgasverdüsungsanlage (VIGA) hergestellt wurde.

3. Verwendung nach Anspruch 1 oder 2 mit einem Chromgehalt von 24 bis < 32%.

4. Verwendung nach einem der Ansprüche 1 bis 3 für durch additive Fertigung erzeugte Komponenten oder Bauteile bzw. Schichten auf Komponenten oder Bauteilen.

5. Verwendung nach einem der Ansprüche 1 bis 3 als Bauteile oder Komponenten bzw. Schichten auf Komponenten oder Bauteilen. in der der petrochemischen Industrie.

6. Verwendung nach einem der Ansprüche 1 bis 3 im Ofenbau.

**Claims**

1. Use of a nickel-chromium-aluminium alloy as powder for additive manufacturing, wherein the powder consists of spherical particles having a size from 5 to 250 $\mu$m, and wherein said alloy consists of (in % by weight) 24 to 33% chromium, 1.8 to 4.0% aluminium, 0.10 to 7.0% iron, 0.001 to < 0.05% silicon, 0.005 to < 0.05% manganese, 0.00 to 0.60% titanium, 0.0 to 0.05% magnesium and/or calcium respectively, 0.005 to 0.12% carbon, 0.001 to 0.050% nitrogen, 0.00001 - 0.100% oxygen, 0.001 to 0.030% phosphorus, not more than 0.010% sulphur, not more than 2.0% molybdenum, not more than 2.0% tungsten, optionally with contents of yttrium from 0.0 - 0.2%, of cerium from 0.0 - 0.02%, of niobium from 0.0 - 1.1%, of zirconium from 0.0 - 0.20%, of boron from 0.0001 - 0.008%, further optionally containing 0.0 - 5.0% cobalt, not more than 0.5% copper, the remainder being nickel and the usual process-related impurities in maximum quantities of 0.002% Pb, 0.002% Zn, 0.002% Sn, wherein with a pore size > 1 $\mu$m the powder has total inclusions of 0.0 - 4% of the pore surface area, wherein the particles have a size of 5 - 150 $\mu$m, in particular 10 - 150 $\mu$m, wherein the powder has a bulk density from 2 up to the density of the alloy of max. 8 g/cm$^3$, and wherein the following relationship must be satisfied:

$$Fp \leq 39.9,$$

where

$$Fp = Cr + 0.272*Fe + 2.36*Al + 2.22*Si + 2.48*Ti \qquad (3a)$$

$$+0.374*Mo + 0.538*W - 11.8*C \qquad (4a)$$

wherein Cr, Fe, Al, Si, Ti, Mo, W, and C are the concentrations of the involved elements in % by mass.

2. Use according to Claim 1, wherein the powder was produced by means of a vacuum inert gas atomisation (VIGA) plant.

3. Use according to Claim 1 or 2 with a chromium content of 24 to < 32%.

4. Use according to any one of claims 1 to 3 for components or parts produced by additive manufacturing, and/or layers on components or parts.

5. Use according to any one of claims 1 to 3 as parts or components and/or layers on components or parts in the petrochemical industry.

6. Use according to any one of claims 1 to 3 in furnace construction.

**Revendications**

1. Utilisation d'un alliage de nickel-chrome-aluminium-sous la forme d'une poudre pour la fabrication additive, sachant que la poudre est composée de particules sphériques d'une taille de 2 à 250 $\mu$m et sachant que cet alliage est composé (en %/poids) de 24 à 33 % de chrome, de 1,8 % à 4,0 % d'aluminium, de 0,10 à 7,0 % de fer, de 0,001 à < 0,05 % de silicium, de 0,005 à < 0, 05 % de manganèse, de 0,00 à 0,60 % de titane, respectivement de 0,0 à 0,05 % de magnésium et/ou de calcium, de 0,005 à 0,12 % de carbone, de 0,001 à 0,050 % d'azote, de 0,00001 - 0,100 % d'oxygène, de 0,001 à 0,030 % de phosphore, au maximum de 0,010 % de soufre, au maximum de 2,0 % de molybdène, au maximum de 2,0 % de tungstène, selon nécessités avec une teneur en yttrium de 0,0 - 0,2 %, en cérium de 0,0 - 0,02 %, en niobium de 0,0 - 1,1 %, en zircon de 0,0 - 0,20 %, en bore de 0,0001 - 0,008 %, de plus selon nécessités contenant du cobalt de 0,0 - 5,0 %, du cuivre au maximum de 0,5 %, du nickel résiduaire et les impuretés habituelles conditionnées par le procédé dans une teneur maximale de 0,002 % de plomb, au maximum de 0,002 % de zinc, au maximum de 0,002 % d'étain, sachant que la poudre possède à une taille de pore > 1 $\mu$m des inclusions totales de 0,0 - 4 % de surface poreuse, sachant que les particules comportent une taille de 5 - 150 $\mu$m, en particulier 10 - 150 $\mu$m, sachant que la poudre possède une densité apparente de 2 jusqu' à la densité de l'alliage d'un maximum de 8 g/ cm$^3$ et sachant que le rapport suivant doit être satisfait :

$$Fp \leq 39,9$$

avec

$$Fp = Cr+0,272*Fe + 2,36*Al + 2,22*Si + 2,48*Ti \quad (3a)$$
$$+ 0,374*Mo + 0,538*W - 11,8*C \quad (4a)$$

sachant que Cr, Fe, Al, Si, Ti, Mo, W et C sont la concentration des éléments concernés en %/masse.

2. Utilisation selon la revendication 1, sachant que la poudre a été fabriquée au moyen d'une installation d'atomisation de gaz inerte sous vide (IAGIV).

3. Utilisation selon la revendication 1 ou 2 avec une teneur en chrome de 24 à < 32 %.

4. Utilisation selon l'une quelconque des revendications 1 à 3 pour des constituants ou composants ou bien des couches sur constituants ou composants produits par fabrication additive.

5. Utilisation selon l'une quelconque des revendications 1 à 3 sous la forme de constituants ou composants ou bien de couches sur constituants ou composants dans l'industrie pétrochimique.

6. Utilisation selon l'une quelconque des revendications 1 à 3 dans la construction de fours.

Figur 1

Figur 2

EP 3 775 308 B1

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6623869 B1
- EP 0508058 A1
- US 4882125 B1
- EP 0549286 A1
- DE 60004737 T2
- DE 2417186
- EP 1505166 A1
- DE 102012011161 A1
- WO 2017026519 A1
- US 488125 A

**In der Beschreibung aufgeführte Nicht-Patentliteratur**

- **GRABKE, H.J. ; KRAJAK, R. ; MÜLLER-LORENZ, E.M. ; STRAUß, S.** *Materials and Corrosion,* 1996, vol. 47, 495
- **HERMSE, C.G.M. ; VAN WORTEL, J.C.** Metal dusting: relationship between alloy composition and degradation rate. *Corrosion Engineering, Science and Technology,* 2009, vol. 44, 182-185
- **B. RALF BÜRGEL.** Handbuch der Hochtemperaturwerkstofftechnik. Vieweg Verlag, 2006, 370-374
- **SLEVOLDEN, J.Z. ; ALBERTSEN. U. FINK.** Tjeldbergodden Methanol Plant: Metal Dusting Investigations. *Corrosion/2011,* 2011, (11144), 15
- **E. SLEVOLDEN ; J.Z. ALBERTSEN. U. FINK.** Tjeldbergodden Methanol Plant: Metal Dusting Investigations. *Corrosion/201,* 2011, (11144), 15
- **E. SLEVOLDEN ; J.Z. ALBERTSEN. U. FINK.** Tjeldbergodden Methanol Plant: Metal Dusting Investigations. *Corrosion/2011,* 2011, (11144), 15
- **B. RALF BÜRGEL.** Handbuch der Hochtemperaturwerkstofftechnik. Vieweg Verlag, 2006, 358-369
- **HERMSE, C.G.M. ; VAN WORTEL, J.C.** Metal dusting: relationship between alloy composition and degradation rate. *Corrosion Engineering, Science and Technology,* 2009, vol. 44, 182-185